# EUROPEAN PATENT SPECIFICATION

(11) **EP 3 523 982 B1**
(45) Date of publication and mention of the grant of the patent: **09.03.2022**
(21) Application number: 17778082.2
(22) Date of filing: 20.09.2017
(51) Int. Cl.: H04N 21/845, H04N 21/854, H04N 21/262, H04N 21/238

(54) **SYSTEMS AND METHODS FOR SIGNALING MISSING OR CORRUPTED VIDEO DATA**
SYSTEM UND VERFAHREN ZUR SIGNALISIERUNG FEHLENDER ODER BESCHÄDIGTER VIDEODATEN
SYSTÈME ET PROCÉDÉ POUR SIGNALER DES DONNÉES VIDEO MANQUANTES OU CORROMPUES

(30) Priority: 10.10.2016 US 201662406349 P; 19.09.2017 US 201715708914
(43) Date of publication of application: 14.08.2019
(73) Proprietor: Qualcomm Incorporated, San Diego, CA 92121-1714 (US)
(72) Inventor: WANG, Ye-Kui, San Diego, California 92121-1714 (US); STOCKHAMMER, Thomas, San Diego, California 92121-1714 (US)
(74) Representative: Loveless, Ian Mark
(86) International application number: PCT/US2017/052540
(87) International publication number: WO 2018/071149

(56) References cited:
- WO-A1-2016/128803
- DAVID SINGER: "Recording the absence of data in an MP4 file", 116. MPEG MEETING; 17-10-2016 - 21-10-2016; CHENGDU; (MOTION PICTURE EXPERT GROUP OR ISO/IEC JTC1/SC29/WG11),, no. m38920, 19 August 2016 (2016-08-19), XP030067268,
- KILROY HUGHES: "Segment Gap Signaling", 109. MPEG MEETING; 7-7-2014 - 11-7-2014; SAPPORO; (MOTION PICTURE EXPERT GROUP OR ISO/IEC JTC1/SC29/WG11),, no. m34511, 8 July 2014 (2014-07-08), XP030062884,
- KILROY HUGHES ET AL: "Study of 23000-19 CMAF CD", 116. MPEG MEETING; 17-10-2016 - 21-10-2016; CHENGDU; (MOTION PICTURE EXPERT GROUP OR ISO/IEC JTC1/SC29/WG11),, no. m39181, 7 October 2016 (2016-10-07), XP030067527,
- MISKA M HANNUKSELA: "ISOBMFF: Support for incomplete tracks", 97. MPEG MEETING; 18-7-2011 - 22-7-2011; TORINO; (MOTION PICTURE EXPERT GROUP OR ISO/IEC JTC1/SC29/WG11),, no. m21144, 12 July 2011 (2011-07-12), XP030049707,

## Description

### FIELD

This application is related to the signaling of missing or corrupted video data. The signaling information can be part of a media file associated with one or more media file formats, such as an ISO based media file format (ISOBMFF) or other suitable file formats, file formats associated with streaming applications such as Dynamic Adaptive Streaming over HTTP (DASH), HTTP Live Streaming (HLS), Common Media Application Format (CMAF), and/or other suitable streaming applications.

### BACKGROUND

Video coding standards include ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 or ISO/IEC MPEG-4 AVC, including its scalable video coding extension known as Scalable Video Coding (SVC) and its multiview video coding extension Multiview Video Coding (MVC) extensions, and High-Efficiency Video Coding (HEVC), also known as ITU-T H.265 and ISO/IEC 23008-2, including its scalable coding extension (i.e., scalable high-efficiency video coding, SHVC) and multiview extension (i.e., multiview high efficiency video coding, MV-HEVC).

David Singer, in "Recording the absence of data in an MP4 file", 116. MPEG MEETING; 17-10-2016 - 21-10-2016; CHENGDU; (MOTION PICTURE EXPERT GROUP OR ISO/IEC JTC1/SC29/WG11), no. m38920, 19 August 2016 discusses a media level indication which comprises new codecs called 'lost' and 'null'. The lost codec indicates that the file writer doesn't know what media should be here, if anything, whereas the null codec indicates the same as an empty edit.

MISKA M HANNUKSELA, "ISOBMFF: Support for incomplete tracks", 97. MPEG MEETING; 18-7-2011 - 22-7-2011; TORINO; (MOTION PICTURE EXPERT GROUP OR ISO/IEC JTC1/SC29/WG11), no. m21144, 12 July 2011 discloses a new sample entry code 'icpv' meaning an incomplete track.

WO 2016/128803 discloses encapsulating a box moof or mdat detected as corrupted into a specific container box. The corrupted box may be totally or partially corrupted. The container box comprises a header and a payload containing the corrupted box moof or mdat. The header comprises a box identifier, a size of the block, a box pcfb containing index and size data for locating corrupted data (and thus non-corrupted data) in the corrupted box.

See also KILROY HUGHES, "Segment Gap Signaling", 109. MPEG MEETING; 7-7-2014 - 11-7-2014; SAPPORO; (MOTION PICTURE EXPERT GROUP OR ISO/IEC JTC1/SC29/WG11), no. m34511. 8 July 2014; and KILROY HUGHES ET AL, "Study of 23000-19 CMAF CD", 116. MPEG MEETING; 17-10-2016 - 21-10-2016; CHENGDU; (MOTION PICTURE EXPERT GROUP OR ISO/IEC JTC1/SC29/WG11), no. m39181, 7 October 2016.

### BRIEF SUMMARY

In some embodiments, techniques are described for indicating that media content includes missing and/or corrupted video data. For example, an indication can be added to a file indicating that media content in the file includes missing and/or corrupted media data. In another example, missing and/or corrupted media data can be indicated by not allowing such media data to be included in the file and/or bitstream. For instance, a transmitter-side constraint can be defined that requires an encoder or other transmitter-side device to not include corrupted media frames in files (in encapsulation) and/or segments (in segmentation). The missing or corrupted video data can include video data of video frames (referred to as a missing or corrupted video frame), video data of video segments (referred to as a missing or corrupted video segment), or other missing video data. By signaling missing and/or corrupted video data, video player devices can properly render or otherwise handle the missing and/or corrupted video frames when processing the media content.

The invention is defined in the appended independent claims.

Optional features are defined in the dependent claims.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

Illustrative embodiments of the present invention are described in detail below with reference to the following drawing figures:
FIG. 1 is a block diagram illustrating an example of a system including an encoding device and a decoding device.
FIG. 2 and FIG. 3 illustrate an example of an ISO base media file that contains data and metadata for a video presentation, formatted according to the ISOBMFF.
FIG. 4 illustrates an example system for media streaming.
FIG. 5 provides a graphical representation of an example of media presentation description.
FIG. 6 provides a graphical representation of an example of a playlist.
FIG. 7A and FIG. 7B illustrate an example of signaling corrupted frames in an ISOBMFF file.
FIG. 8A and FIG. 8B illustrate an example of signaling missing frames in an ISOBMFF file.
FIG. 9 illustrates an example of signaling missing frames in an ISOBMFF file.
FIG. 10 illustrates an example of providing unified signaling of missing video frames or corrupted video frames in an ISOBMFF file.
FIG. 11 and FIG. 12 illustrate examples of signaling of missing file segments for media streaming.
FIG. 13 illustrates an example of a process for processing video data.
FIG. 14 illustrates an example of a process for processing a media file.
FIG. 15 is a block diagram illustrating an example encoding device that may implement one or more of the techniques described in this disclosure.
FIG. 16 is a block diagram illustrating an example decoding device.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the invention. However, it will be apparent that various embodiments may be practiced without these specific details. The figures and description are not intended to be restrictive.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc., may be passed, forwarded, or transmitted via any suitable means including memory sharing, message passing, token passing, network transmission, or the like.

Furthermore, embodiments may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks.

Video frames can be encoded and/or compressed for storage and/or transmission. Encoding and/or compression can be accomplished using a video codec (e.g., a H.265/HEVC compliant codec, a H.264/AVC compliant codec, or other suitable codec) and results in a compressed video bitstream or group of bitstreams. Encoding of video data using a video codec is described in further detail below.

The encoded video bitstream(s) can be stored and/or encapsulated in a media format or file format. The stored bitstream(s) can be transmitted, for example, over a network, to a receiver device that can decode and render the video for display. Such a receiver device may be referred to herein as a video display device. For example, a streaming server can generate encapsulated files from the encoded video data (e.g., using an International Standards Organization (ISO) base media file format, and/or other file formats optimized for streaming). For instance, the video codec can encode the video data and an encapsulation engine can generate the media files by encapsulating the video data in one or more ISO format media files. Alternatively or additionally, the stored bitstream(s) can be provided directly from a storage medium to a receiver device.

A receiver device can also implement a codec to decode and/or decompress an encoded video bitstream. The receiver device can support the media or file format that was used to pack the video bitstream into a file (or files), extract the video (and possibly also audio) data, to generate the encoded video data. For example, the receiver device can parse the media files with the encapsulated video data to generate the encoded video data, and the codec in the receiver device can decode the encoded video data. The receiver device can then send the decoded video signal to a rendering device (e.g., a video display device). A rendering device may render a video at the same frame rate at which the video was captured, or at a different frame rate.

File format standards can define the format for packing and unpacking video (and possibly also audio) data into one or more files. File format standards include International Organization for Standardization (ISO) base media file format (ISOBMFF, defined in ISO/IEC 14496-12) and other file formats derived from the ISOBMFF, including Motion Pictures Experts Group (MPEG) MPEG-4 file format (defined in ISO/IEC 14496-15), 3rd Generation Partnership Project (3GPP) file format (defined in 3GPP TS 26.244) and Advanced Video Coding (AVC) file format and High Efficiency Video Coding (HEVC) file format (both defined in ISO/IEC 14496-15). The draft texts of recent new editions for ISO/IEC 14496-12 and 14496-15 are available at http://phenix.int-evry.fr/mpeg/doc_end_user/documents/111_Geneva/wg11/w15177-v6-w15177.zip and http://phenix.int-evry.fr/mpeg/doc_end_user/documents/112_Warsaw/ wg11/w15479-v2-w15479.zip, respectively.

The ISOBMFF is used as the basis for many codec encapsulation formats (e.g., the AVC file format or any other suitable codec encapsulation format), as well as for many multimedia container formats (e.g., the MPEG-4 file format, the 3GPP file format (3GP), the DVB file format, or any other suitable multimedia container format). ISOBMFF-based file formats can be used for continuous media, which is also referred to as streaming media.

In addition to continuous media (e.g., audio and video), static media (e.g., images) and metadata can be stored in a file conforming to ISOBMFF. Files structured according to the ISOBMFF may be used for many purposes, including local media file playback, progressive downloading of a remote file, as segments for a media streaming scheme such as Dynamic Adaptive Streaming over HTTP (DASH), a media streaming scheme using Common Media Application Format (CMAF), etc., as containers for content to be streamed (in which case the containers include packetization instructions), for recording of received real-time media bitstreams, or other uses.

A media file, or a media bitstream, may include corrupted or missing video frames in the encoded data. A missing frame may occur when all the encoded data of that missing frame is lost. A corrupted frame may occur in different ways. For example, a frame may become corrupted when part of the encoded data for that frame is lost. As another example, a frame may become corrupted when the frame is part of an inter-frame prediction chain, and some other encoded data of the inter frame prediction chain is lost such that the frame cannot be correctly decoded.

The encoded data may include corrupted or missing video frames due to various reasons. For example, data loss may occur during the transmission of a media bitstream (e.g., of a compressed, encapsulated bitstream). As a result, a media file may be partially received and is recorded and, consequently, there are missing or corrupted video frames in the recorded file. As noted previously, a missing frame is a frame for which all the coded data is lost, and a corrupted frame is a frame for which either part of the coded data is lost or some coded data of a frame in the inter-frame prediction chain is lost such that the corrupted frame cannot be correctly decoded. As another example, the encoded media data can become corrupted (e.g., due to media file corruption), or even missing, before being encapsulated for transmission at a server. As another example, an encoder (or a transcoder) may crash or fail in the midst of encoding the media data. The encoder failure may lead to some frames not being encoded (and not included) in the encoded data, causing the encoded data to include missing frames. The encoder failure may also lead to partial encoding of frames and inclusion of the partial data in the encoded data. If the partial data is not sufficient to decode the frames properly, the encoded data may also include corrupted frames.

As noted above, data loss or absence can occur before the media encoder handles the video data. In some cases, frames can be skipped by the encoder during encoding. In such cases, the encoder can encode the bitstream without the missing or skipped frames, and the bitstream can be of non-constant frame rate. Effectively, for video, the frame immediately preceding a missing or skipped frame would have a longer playback duration, and for audio a missing or skipped frame is considered as a silent frame. In some cases, for each missing or skipped frame for video, the encoder can encode a dummy video frame using a minimal number of bits, in which case the decoding result of the dummy video frame is exactly the same as the previous frame in output order. For speech/audio, a silent frame is encoded, thus keeping the bitstream with a constant frame rate. In either case, the coded media bitstream is considered as having no missing or corrupted frames, and media encapsulation in file and/or streaming formats can remain the same as if there were no such data loss/absence or frame skipping.

As previously noted, data loss or absence can occur during encoding and/or transcoding. In such cases, depending on when the crash or fail occurs, there can also be missing and/or corrupted media frames. To the media processing functionalities after the media encoder (encapsulation and/or segmentation), the handling can be the same as if the data loss occurred after the encoder.

The ISOBMFF and its derived file formats (e.g., the AVC file format or other derived file formats) are widely used for storage and encapsulation of media content (e.g., including video, audio, and timed text) in many multimedia applications. The ISOBMFF and file formats derived from ISOBMFF do not, however, include specifications for signaling of corrupted video frames. Moreover, there is also lack of a mechanism of signaling missing or corrupted video frames in a media streaming scheme.

The lack of signaling schemes can lead to undesirable behaviors in the receiver device when processing encoded data with missing or corrupted video frames. For example, the receiver device may attempt to decode a frame which cannot be decoded, either because the encoded data of the frame is missing or corrupted. The decoder may crash, or hang, as a result. Moreover, during a media streaming session the receiver device may attempt to retrieve and play a media segment file that is either missing or including empty frames. When the receiver device fails to retrieve and play that media segment file, the media streaming session will become disrupted. Both cases cause disruption in the rendering of the media stream, leading to bad user experiences.

In various implementations, modifications and/or additions to the ISOBMFF can indicate/signal that a file that has been formatted according to the ISOBMFF, or a format derived from the ISOBMFF, includes corrupted video frames. For example, in some implementation, an media file can include an indicator to indicate that one or more video frames associated with a particular playing timestamp and playing duration are corrupted. The indicator can also be configured as a unified indicator associated with both corrupted video frames and missing video frames. In some implementation, the signaling of presence of corrupted video frames can come in the form of one or more omissions of those corrupted video frames from the media file. In various implementations, modifications and/or additions to existing media streaming scheme can also indicate to a receiver device that a media segment contains missing (or otherwise not-decodable) frames, prior to the receiver device requesting for the media segment.

In these and other implementations, the receiver device can recognize, based on the indication/indicator/signaling/signal, that a media file includes corrupted video frames. The receiver device can also identify the part of encoded data that includes corrupted video frames ahead of decoding the data, and adopt certain measures in handling the corrupted video frames. For example, the receiver device may skip the decoding of the corrupted video frames and move on to the next decodable video frame, to avoid crashing or hanging the decoder as described above. Moreover, during a media streaming session, the receiver device may also recognize, based on the indication/indicator/signaling/signal, that a media segment includes missing (or otherwise not-decodable) frames, before requesting for that media segment, and adopt certain measures in handling that media segment. For example, the receiver device may obtain another media segment (e.g., a media segment with identical content but from a different source, a media segment with the same time stamp and duration but with a different resolution/bitrate, etc.), to maintain the continuity of the streaming session.

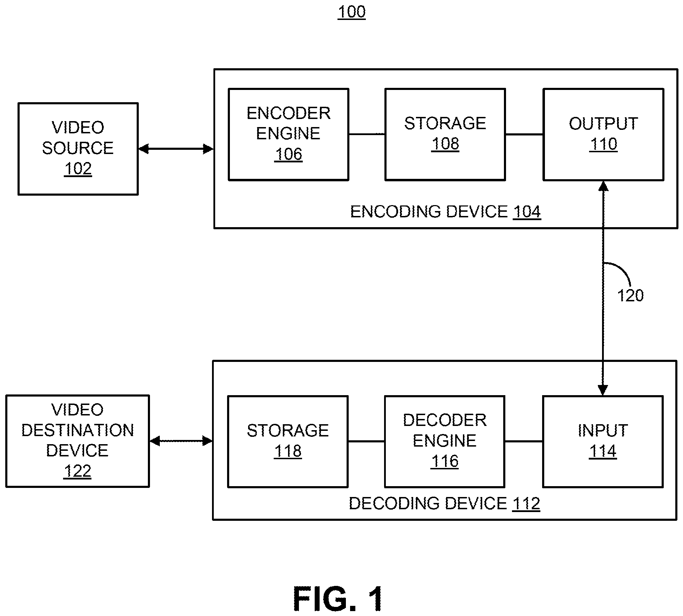

FIG. 1 is a block diagram illustrating an example of a system 100 including an encoding device 104 and a decoding device 112. The encoding device 104 may be part of a source device, and the decoding device 112 may be part of a receiver device. The source device and/or the receiver device may include an electronic device, such as a mobile or stationary telephone handset (e.g., smartphone, cellular telephone, or the like), a desktop computer, a laptop or notebook computer, a tablet computer, a set-top box, a television, a camera, a display device, a digital media player, a video gaming console, a video streaming device, or any other suitable electronic device. In some examples, the source device and the receiver device may include one or more wireless transceivers for wireless communications. The coding techniques described herein are applicable to video coding in various multimedia applications, including streaming video transmissions (e.g., over the Internet), television broadcasts or transmissions, encoding of digital video for storage on a data storage medium, decoding of digital video stored on a data storage medium, or other applications. In some examples, system 100 can support one-way or two-way video transmission to support applications such as video conferencing, video streaming, video playback, video broadcasting, gaming, and/or video telephony.

The encoding device 104 (or encoder) can be used to encode video data, including virtual reality video data, using a video coding standard or protocol to generate an encoded video bitstream. Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its scalable video coding and multiview video coding extensions, known as SVC and MVC, respectively. A more recent video coding standard, High-Efficiency Video Coding (HEVC), has been finalized by the Joint Collaboration Team on Video Coding (JCT-VC) of ITU-T Video Coding Experts Group (VCEG) and ISO/IEC Moving Picture Experts Group (MPEG). Various extensions to HEVC deal with multi-layer video coding and are also being developed by the JCT-VC, including the multiview extension to HEVC, called MV-HEVC, and the scalable extension to HEVC, called SHVC, or any other suitable coding protocol.

Implementations described herein describe examples using the HEVC standard, or extensions thereof. However, the techniques and systems described herein may also be applicable to other coding standards, such as AVC, MPEG, extensions thereof, or other suitable coding standards already available or not yet available or developed. Accordingly, while the techniques and systems described herein may be described with reference to a particular video coding standard, one of ordinary skill in the art will appreciate that the description should not be interpreted to apply only to that particular standard.

A video source 102 may provide the video data to the encoding device 104. The video source 102 may be part of the source device, or may be part of a device other than the source device. The video source 102 may include a video capture device (e.g., a video camera, a camera phone, a video phone, or the like), a video archive containing stored video, a video server or content provider providing video data, a video feed interface receiving video from a video server or content provider, a computer graphics system for generating computer graphics video data, a combination of such sources, or any other suitable video source. One example of a video source 102 can include an Internet protocol camera (IP camera). An IP camera is a type of digital video camera that can be used for surveillance, home security, or other suitable application. Unlike analog closed circuit television (CCTV) cameras, an IP camera can send and receive data via a computer network and the Internet.

The video data from the video source 102 may include one or more input pictures or frames. A picture or frame is a still image that is part of a video. The encoder engine 106 (or encoder) of the encoding device 104 encodes the video data to generate an encoded video bitstream. In some examples, an encoded video bitstream (or "video bitstream" or "bitstream") is a series of one or more coded video sequences. A coded video sequence (CVS) includes a series of access units (AUs) starting with an AU that has a random access point picture in the base layer and with certain properties up to and not including a next AU that has a random access point picture in the base layer and with certain properties. For example, the certain properties of a random access point picture that starts a CVS may include a RASL flag (e.g., NoRaslOutputFlag) equal to 1. Otherwise, a random access point picture (with RASL flag equal to 0) does not start a CVS. An access unit (AU) includes one or more coded pictures and control information corresponding to the coded pictures that share the same output time. Coded slices of pictures are encapsulated in the bitstream level into data units called network abstraction layer (NAL) units. For example, an HEVC video bitstream may include one or more CVSs including NAL units. Two classes of NAL units exist in the HEVC standard, including video coding layer (VCL) NAL units and non-VCL NAL units. A VCL NAL unit includes one slice or slice segment (described below) of coded picture data, and a non-VCL NAL unit includes control information that relates to one or more coded pictures.

NAL units may contain a sequence of bits forming a coded representation of the video data (e.g., an encoded video bitstream, a CVS of a bitstream, or the like), such as coded representations of pictures in a video. The encoder engine 106 generates coded representations of pictures by partitioning each picture into multiple slices. The slices are then partitioned into coding tree blocks (CTBs) of luma samples and chroma samples. A CTB of luma samples and one or more CTBs of chroma samples, along with syntax for the samples, are referred to as a coding tree unit (CTU). A CTU is the basic processing unit for HEVC encoding. A CTU can be split into multiple coding units (CUs) of varying sizes. A CU contains luma and chroma sample arrays that are referred to as coding blocks (CBs).

The luma and chroma CBs can be further split into prediction blocks (PBs). A PB is a block of samples of the luma or a chroma component that uses the same motion parameters for inter-prediction. The luma PB and one or more chroma PBs, together with associated syntax, form a prediction unit (PU). A set of motion parameters is signaled in the bitstream for each PU and is used for inter-prediction of the luma PB and the one or more chroma PBs. A CB can also be partitioned into one or more transform blocks (TBs). A TB represents a square block of samples of a color component on which the same two-dimensional transform is applied for coding a prediction residual signal. A transform unit (TU) represents the TBs of luma and chroma samples, and corresponding syntax elements.

A size of a CU corresponds to a size of the coding node and may be square in shape. For example, a size of a CU may be 8 x 8 samples, 16 x 16 samples, 32 x 32 samples, 64 x 64 samples, or any other appropriate size up to the size of the corresponding CTU. The phrase "N x N" is used herein to refer to pixel dimensions of a video block in terms of vertical and horizontal dimensions (e.g., 8 pixels x 8 pixels). The pixels in a block may be arranged in rows and columns. In some embodiments, blocks may not have the same number of pixels in a horizontal direction as in a vertical direction. Syntax data associated with a CU may describe, for example, partitioning of the CU into one or more PUs. Partitioning modes may differ between whether the CU is intra-prediction mode encoded or inter-prediction mode encoded. PUs may be partitioned to be non-square in shape. Syntax data associated with a CU may also describe, for example, partitioning of the CU into one or more TUs according to a CTU. A TU can be square or non-square in shape.

According to the HEVC standard, transformations may be performed using transform units (TUs). TUs may vary for different CUs. The TUs may be sized based on the size of PUs within a given CU. The TUs may be the same size or smaller than the PUs. In some examples, residual samples corresponding to a CU may be subdivided into smaller units using a quadtree structure known as residual quad tree (RQT). Leaf nodes of the RQT may correspond to TUs. Pixel difference values associated with the TUs may be transformed to produce transform coefficients. The transform coefficients may then be quantized by the encoder engine 106.

Once the pictures of the video data are partitioned into CUs, the encoder engine 106 predicts each PU using a prediction mode. The prediction is then subtracted from the original video data to get residuals (described below). For each CU, a prediction mode may be signaled inside the bitstream using syntax data. A prediction mode may include intra-prediction (or intra-picture prediction) or inter-prediction (or inter-picture prediction). Using intra-prediction, each PU is predicted from neighboring image data in the same picture using, for example, DC prediction to find an average value for the PU, planar prediction to fit a planar surface to the PU, direction prediction to extrapolate from neighboring data, or any other suitable types of prediction. Using inter-prediction, each PU is predicted using motion compensation prediction from image data in one or more reference pictures (before or after the current picture in output order). The decision whether to code a picture area using inter-picture or intra-picture prediction may be made, for example, at the CU level. In some examples, the one or more slices of a picture are assigned a slice type. Slice types include an I slice, a P slice, and a B slice. An I slice (intra-frames, independently decodable) is a slice of a picture that is only coded by Intra prediction, and, therefore, is independently decodable since the I slice requires only the data within the frame to predict any block of the slice. A P slice (uni-directional predicted frames) is a slice of a picture that may be coded with intra-prediction and uni-directional inter-prediction. Each block within a P slice is either coded with Intra prediction or inter-prediction. When the inter-prediction applies, the block is only predicted by one reference picture, and, therefore, reference samples are only from one reference region of one frame. A B slice (bi-directional predictive frames) is a slice of a picture that may be coded with intra-prediction and inter-prediction. A block of a B slice may be bi-directional predicted from two reference pictures, where each picture contributes one reference region and sample sets of the two reference regions are weighted (e.g., with equal weights) to produce the prediction signal of the bi-directional predicted block. As explained above, slices of one picture are independently coded. In some cases, a picture can be coded as just one slice.

A PU may include data related to the prediction process. For example, when the PU is encoded using intra-prediction, the PU may include data describing an intra-prediction mode for the PU. As another example, when the PU is encoded using inter-prediction, the PU may include data defining a motion vector for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

The encoding device 104 may then perform transformation and quantization. For example, following prediction, the encoder engine 106 may calculate residual values corresponding to the PU. Residual values may comprise pixel difference values. Any residual data that may be remaining after prediction is performed is transformed using a block transform, which may be based on discrete cosine transform, discrete sine transform, an integer transform, a wavelet transform, or other suitable transform function. In some cases, one or more block transforms (e.g., sizes 32 x 32, 16 x 16, 8 x 8, 4 x 4, or the like) may be applied to residual data in each CU. In some embodiments, a TU may be used for the transform and quantization processes implemented by the encoder engine 106. A given CU having one or more PUs may also include one or more TUs. As described in further detail below, the residual values may be transformed into transform coefficients using the block transforms, and then may be quantized and scanned using TUs to produce serialized transform coefficients for entropy coding.

In some embodiments following intra-predictive or inter-predictive coding using PUs of a CU, the encoder engine 106 may calculate residual data for the TUs of the CU. The PUs may comprise pixel data in the spatial domain (or pixel domain). The TUs may comprise coefficients in the transform domain following application of a block transform. As previously noted, the residual data may correspond to pixel difference values between pixels of the unencoded picture and prediction values corresponding to the PUs. The encoder engine 106 may form the TUs including the residual data for the CU, and may then transform the TUs to produce transform coefficients for the CU.

The encoder engine 106 may perform quantization of the transform coefficients. Quantization provides further compression by quantizing the transform coefficients to reduce the amount of data used to represent the coefficients. For example, quantization may reduce the bit depth associated with some or all of the coefficients. In one example, a coefficient with an n-bit value may be rounded down to an m-bit value during quantization, with n being greater than m.

Once quantization is performed, the coded video bitstream includes quantized transform coefficients, prediction information (e.g., prediction modes, motion vectors, or the like), partitioning information, and any other suitable data, such as other syntax data. The different elements of the coded video bitstream may then be entropy encoded by the encoder engine 106. In some examples, the encoder engine 106 may utilize a predefined scan order to scan the quantized transform coefficients to produce a serialized vector that can be entropy encoded. In some examples, the encoder engine 106 may perform an adaptive scan. After scanning the quantized transform coefficients to form a vector (e.g., a one-dimensional vector), the encoder engine 106 may entropy encode the vector. For example, the encoder engine 106 may use context adaptive variable length coding, context adaptive binary arithmetic coding, syntax-based context-adaptive binary arithmetic coding, probability interval partitioning entropy coding, or another suitable entropy encoding technique.

The output 110 of the encoding device 104 may send the NAL units making up the encoded video bitstream data over the communications link 120 to the decoding device 112 of the receiver device. The input 114 of the decoding device 112 may receive the NAL units. The communications link 120 may include a channel provided by a wireless network, a wired network, or a combination of a wired and wireless network. A wireless network may include any wireless interface or combination of wireless interfaces and may include any suitable wireless network (e.g., the Internet or other wide area network, a packet-based network, WiFi^{™}, radio frequency (RF), UWB, WiFi-Direct, cellular, Long-Term Evolution (LTE), WiMax^{™}, or the like). A wired network may include any wired interface (e.g., fiber, ethernet, powerline ethernet, ethernet over coaxial cable, digital signal line (DSL), or the like). The wired and/or wireless networks may be implemented using various equipment, such as base stations, routers, access points, bridges, gateways, switches, or the like. The encoded video bitstream data may be modulated according to a communication standard, such as a wireless communication protocol, and transmitted to the receiver device.

In some examples, the encoding device 104 may store encoded video bitstream data in storage 108. The output 110 may retrieve the encoded video bitstream data from the encoder engine 106 or from the storage 108. Storage 108 may include any of a variety of distributed or locally accessed data storage media. As an example, storage 108 can be an internal storage device as part of encoding device 104. As another example, storage 108 can also be associated with other devices or equipment coupled to communications link 120. In all these examples, storage 108 may include a hard drive, a storage disc, flash memory, volatile or non-volatile memory, or any other suitable digital storage media for storing encoded video data.

The input 114 of the decoding device 112 receives the encoded video bitstream data and may provide the video bitstream data to the decoder engine 116, or to storage 118 for later use by the decoder engine 116. The decoder engine 116 may decode the encoded video bitstream data by entropy decoding (e.g., using an entropy decoder) and extracting the elements of one or more coded video sequences making up the encoded video data. The decoder engine 116 may then rescale and perform an inverse transform on the encoded video bitstream data. Residual data is then passed to a prediction stage of the decoder engine 116. The decoder engine 116 then predicts a block of pixels (e.g., a PU). In some examples, the prediction is added to the output of the inverse transform (the residual data).

The decoding device 112 may output the decoded video to a video destination device 122, which may include a display or other output device for displaying the decoded video data to a consumer of the content. In some aspects, the video destination device 122 may be part of the receiver device that includes the decoding device 112. In some aspects, the video destination device 122 may be part of a separate device other than the receiver device.

Supplemental Enhancement Information (SEI) messages can be included in video bitstreams. For example, SEI messages may be used to carry information (e.g., metadata) that is not essential in order to decode the bitstream by the decoding device 112. This information is useful in improving the display or processing of the decoded output (e.g. such information could be used by decoder-side entities to improve the viewability of the content).

In some embodiments, the video encoding device 104 and/or the video decoding device 112 may be integrated with an audio encoding device and audio decoding device, respectively. The video encoding device 104 and/or the video decoding device 112 may also include other hardware or software that is necessary to implement the coding techniques described above, such as one or more microprocessors, digital signal processors (DSPs), application specific integrated circuits (ASICs), field programmable gate arrays (FPGAs), discrete logic, software, hardware, firmware or any combinations thereof. The video encoding device 104 and the video decoding device 112 may be integrated as part of a combined encoder/decoder (codec) in a respective device.

Extensions to the HEVC standard include the Multiview Video Coding extension, referred to as MV-HEVC, and the Scalable Video Coding extension, referred to as SHVC. The MV-HEVC and SHVC extensions share the concept of layered coding, with different layers being included in the encoded video bitstream. Each layer in a coded video sequence is addressed by a unique layer identifier (ID). A layer ID may be present in a header of a NAL unit to identify a layer with which the NAL unit is associated. In MV-HEVC, different layers can represent different views of the same scene in the video bitstream. In SHVC, different scalable layers are provided that represent the video bitstream in different spatial resolutions (or picture resolution) or in different reconstruction fidelities. The scalable layers may include a base layer (with layer ID = 0) and one or more enhancement layers (with layer IDs = 1, 2, ... n). The base layer may conform to a profile of the first version of HEVC, and represents the lowest available layer in a bitstream. The enhancement layers have increased spatial resolution, temporal resolution or frame rate, and/or reconstruction fidelity (or quality) as compared to the base layer. The enhancement layers are hierarchically organized and may (or may not) depend on lower layers. In some examples, the different layers may be coded using a single standard codec (e.g., all layers are encoded using HEVC, SHVC, or other coding standard). In some examples, different layers may be coded using a multi-standard codec. For example, a base layer may be coded using AVC, while one or more enhancement layers may be coded using SHVC and/or MV-HEVC extensions to the HEVC standard. In general, a layer includes a set of VCL NAL units and a corresponding set of non-VCL NAL units. The NAL units are assigned a particular layer ID value. Layers can be hierarchical in the sense that a layer may depend on a lower layer.

As previously described, an HEVC bitstream includes a group of NAL units, including VCL NAL units and non-VCL NAL units. Non-VCL NAL units may contain parameter sets with high-level information relating to the encoded video bitstream, in addition to other information. For example, a parameter set may include a video parameter set (VPS), a sequence parameter set (SPS), and a picture parameter set (PPS). Examples of goals of the parameter sets include bitrate efficiency, error resiliency, and providing systems layer interfaces. Each slice references a single active PPS, SPS, and VPS to access information that the decoding device 112 may use for decoding the slice. An identifier (ID) may be coded for each parameter set, including a VPS ID, an SPS ID, and a PPS ID. An SPS includes an SPS ID and a VPS ID. A PPS includes a PPS ID and an SPS ID. Each slice header includes a PPS ID. Using the IDs, active parameter sets can be identified for a given slice.

VCL NAL units include coded picture data forming the coded video bitstream. Various types of VCL NAL units are defined in the HEVC standard, as illustrated in Table A below. In a single-layer bitstream, as defined in the first HEVC standard, VCL NAL units contained in an AU have the same NAL unit type value, with the NAL unit type value defining the type of AU and the type of coded picture within the AU. For example, VCL NAL units of a particular AU may include instantaneous decoding refresh (IDR) NAL units (value 19), making the AU an IDR AU and the coded picture of the AU an IDR picture. The given type of a VCL NAL unit is related to the picture, or portion thereof, contained in the VCL NAL unit (e.g., a slice or slice segment of a picture in a VCL NAL unit). Three classes of pictures are defined in the HEVC standard, including leading pictures, trailing pictures, and intra random access (IRAP) pictures (also referred to as "random access pictures"). In a multi-layer bitstream, VCL NAL units of a picture within an AU have the same NAL unit type value and the same type of coded picture. For example, the picture that contains VCL NAL units of type IDR is said to be an IDR picture in the AU. In another example, when an AU contains a picture that is an IRAP picture at the base layer (the layer ID equal to 0), the AU is an IRAP AU.

A video bitstream encoded as discussed above can be written or packed into one or more files in order to transfer the bitstream from the encoding device 104 to the decoding device 112. For example, the output 110 may include a file writing engine, configured to generate one or more files that contain the bitstream. The output 110 can transmit the one or more files over the communications link 120 to the decoder device 112. Alternatively or additionally, the one or more files can be stored on a storage medium (e.g., a tape, a magnetic disk, or a hard drive, or some other medium) for later transmission to the decoding device 112.

The decoder device 112 can include, for example in the input 114, a file parsing engine. The file parsing engine can read files received over the communications link 120 or from a storage medium. The file parsing engine can further extract samples from the file, and reconstruct the bitstream for decoding by the decoder engine 116. In some cases, the reconstructed bitstream can be the same as the bitstream generated by the encoder engine 106. In some cases, the encoder engine 106 may have generated the bitstream with several possible options for decoding the bitstream, in which case the reconstructed bitstream may include only one or fewer than all the possible options.

As discussed above, a media file, and/or a media bitstream, may include corrupted and/or missing video frames. In FIG. 1, the corrupted or missing video frames may occur due to, for example, corruption of the data files including the encoded video bitstream data stored in storage 108, and/or due to data loss during the transmission of the data files over communications link 120. A video frame can become missing when all encoded data (e.g., the video coding layer, the set of motion parameters, the control information, the transformation information etc.) of the entire frame are missing. A video frame can become corrupted due to various reasons. For example, some (but not all) of the encoded data (e.g., the video coding layer, the set of motion parameters, the control information, etc.) for that particular frame may be corrupted, or otherwise cannot be retrieved from the data files. As another example, the encoded data of a reference frame in an inter-prediction chain for the video frame may become missing or corrupted, such that the video frame cannot be correctly decoded.

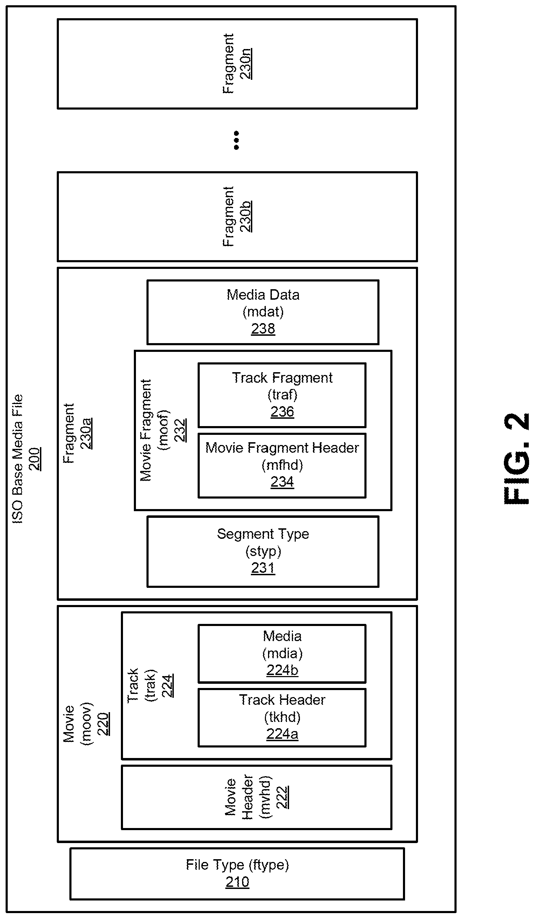

FIG. 2 illustrates an example of an ISO base media file 200 that contains data and metadata for a video presentation, formatted according to the ISOBMFF. The ISOBMFF is designed to contain timed media information in a flexible and extensible format that facilitates interchange, management, editing, and presentation of the media. Presentation of the media may be "local" to the system containing the presentation or the presentation may be via a network or other stream delivery mechanism.

A "presentation," as defined by the ISOBMFF specification, is a sequence of pictures, often related by having been captured sequentially by a video capture device, or related for some other reason. Herein, a presentation may also be referred to as a movie or a video presentation. A presentation may include audio. One of ordinary skill will appreciate that a presentation can include any other type of media content, such a game, a television show, a streaming video file, or the like. A single presentation may be contained in one or more files, with one file (or multiple files) containing the metadata for the whole presentation. The metadata includes information such as timing and framing data, descriptors, pointers, parameters, and other information that describes the presentation. Metadata does not include the video and/or audio data itself. Files other than the file that contains the metadata need not be formatted according to the ISOBMFF, and need only be formatted such that these files can be referenced by the metadata.

The file structure of an ISO base media file is object-oriented, and the structure of an individual object in the file can be inferred directly from the object's type. The objects in an ISO base media file are referred to as "boxes" by the ISOBMFF specification. An ISO base media file is structured as a sequence of boxes, which can contain other boxes. Boxes generally include a header that provides a size and a type for the box. The size describes the entire size of the box, including the header, fields, and all boxes contained within the box. Boxes with a type that is not recognized by a player device are typically ignored and skipped.

As illustrated by the example of FIG. 2, at the top level of the file, an ISO base media file 200 can include a file type box 210, a movie box 220, and one or more movie fragment boxes 230a, 230b through 230n. Other boxes that can be included at this level but that are not represented in this example include free space boxes, metadata boxes, and media data boxes, among others.

An ISO base media file can include a file type box 210, identified by the box type "ftyp." The file type box 210 identifies an ISOBMFF specification that is the most suitable for parsing the file. "Most" in this instance means that the ISO base media file 200 may have been formatted according to a particular ISOBMFF specification, but is likely compatible with other iterations of the specification. This most suitable specification is referred to as the major brand. A player device can use the major brand to determine whether the device is capable of decoding and displaying the contents of the file. The file type box 210 can also include a version number, which can be used to indicate a version of the ISOBMFF specification. The file type box 210 can also include a list of compatible brands, which includes a list of other brands with which the file is compatible. An ISO base media file can be compatible with more than one major brand.

When an ISO base media file 200 includes a file type box 210, there is only one file type box. An ISO base media file 200 may omit the file type box 210 in order to be compatible with older player devices. When an ISO base media file 200 does not include a file type box 210, a player device can assume a default major brand (e.g. "mp41"), minor version (e.g., "0"), and compatible brand (e.g., "mp41"). The file type box 210 is typically placed as early as possible in the ISO base media file 200.

An ISO base media file can further include a movie box 220, which contains the metadata for the presentation. The movie box 220 is identified by the box type "moov." ISO/IEC 14496-12 provides that a presentation, whether contained in one file or multiple files, can include only one movie box 220. Frequently, the movie box 220 is near the beginning of an ISO base media file. The movie box 220 includes a movie header box 222, and can include one or more track boxes 224 as well as other boxes.

The movie header box 222, identified by the box type "mvhd," can include information that is media-independent and relevant to the presentation as a whole. For example, the movie header box 222 can include information such as a creation time, a modification time, a timescale, and/or a duration for the presentation, among other things. The movie header box 222 can also include an identifier that identifies the next track in the presentation. For example, the identifier can point to the track box 224 contained by the movie box 220 in the illustrated example.

The track box 224, identified by the box type "trak," can contain the information for a track for a presentation. A presentation can include one or more tracks, where each track is independent of other tracks in the presentation. Each track can include the temporal and spatial information that is specific to the content in the track, and each track can be associated with a media box. The data in a track can be media data, in which case the track is a media track, or the data can be packetization information for streaming protocols, in which case the track is a hint track. Media data includes, for example, video and audio data. In the illustrated example, the example track box 224 includes a track header box 224a and a media box 224b. A track box can include other boxes, such as a track reference box, a track group box, an edit box, a user data box, a metadata box, and others.

The track header box 224a, identified by the box type "tkhd," can specify the characteristics of a track contained in the track box 224. For example, the track header box 224a can include a creation time, modification time, duration, track identifier, layer identifier, group identifier, volume, width, and/or height of the track, among other things. For a media track, the track header box 224a can further identify whether the track is enabled, whether the track should be played as part of the presentation, or whether the track can be used to preview the presentation, among other things. Presentation of a track is generally assumed to be at the beginning of a presentation. The track box 224 can include an edit list box, not illustrated here, that can include an explicit timeline map. The timeline map can specify, among other things, an offset time for the track, where the offset indicates a start time, after the beginning of the presentation, for the track.

In the illustrated example, the track box 224 also includes a media box 224b, identified by the box type "mdia." The media box 224b can contain the objects and information about the media data in the track. For example, the media box 224b can contain a handler reference box, which can identify the media type of the track and the process by which the media in the track is presented. As another example, the media box 224b can contain a media information box, which can specify the characteristics of the media in the track. The media information box can further include a table of samples, where each sample describes a chunk of media data (e.g., video or audio data) including, for example, the location of the data for the sample. The data for a sample is stored in a media data box, discussed further below. As with most other boxes, the media box 224b can also include a media header box. Metadata for each track can include a list of sample description entries, each providing the coding format and/or encapsulation format used in the track and the initialization data needed for processing that format. Each sample is associated with one of the sample description entries of the track. The ISOBMFF enables specifying sample-specific metadata with various mechanisms. Specific boxes within the Sample Table box ("stbl") have been standardized to respond to common needs. For example, a Sync Sample box ("stss") is used to list the random access samples of the track. A sample grouping mechanism enables mapping of samples according to a four-character grouping type into groups of samples sharing the same property specified as a sample group description entry in the file. Several grouping types have been specified in the ISOBMFF.

In the illustrated example, the example ISO base media file 200 also includes multiple fragments 230a, 230b, through 230n of the presentation. The fragments 230a, 230b, through 230n are not ISOBMFF boxes, but rather describe a combination of boxes including an optional segment type box 231, a movie fragment box 232 and one or more media data boxes 238 that is referenced by the movie fragment box 232. Segment type box 231, movie fragment box 232, and media data boxes 238 are top-level boxes, but are grouped here to indicate the relationship between a movie fragment box 232 and a media data box 238.

Segment type box 231, movie fragment box 232, and media data boxes 238 define an ISOBMFF segment. Segment type box 231 identifies the segment type "styp", which defines a brand of the segment. The brand of the segment needs to be one of the compatible brands listed in file type box 210. Segment type box 231 is followed by movie fragment box 232, identified by the box type "moof," can extend a presentation by including additional information that would otherwise be stored in the movie box 220. Using movie fragment boxes 232, a presentation can be built incrementally. A movie fragment box 232 can include a movie fragment header box 234 and a track fragment box 236, as well as other boxes not illustrated here.

The movie fragment header box 234, identified by the box type "mfhd," can include a sequence number. A player device can use the sequence number to verify that the fragment 230a includes the next piece of data for the presentation. In some cases, the contents of a file, or the files for a presentation, can be provided to a player device out of order. For example, network packets can frequently arrive in an order other than in the order that the packets were originally transmitted. In these cases, the sequence number can assist a player device in determining the correct order for fragments.

The movie fragment box 232 can also include one or more track fragment boxes 236, identified by the box type "traf." A movie fragment box 232 can include a set of track fragments, zero or more per track. The track fragments can contain zero or more track runs, each of which describes a contiguous run of samples for a track. Track fragments can be used to add empty time to a track, in addition to adding samples to the track.

The media data box 238, identified by the box type "mdat," contains media data. In video tracks, the media data box 238 would contain video frames. A media data box can alternatively or additionally include audio data. A presentation can include zero or more media data boxes, contained in one or more individual files. The media data is described by metadata. In the illustrated example, the media data in the media data box 238 can be described by metadata included in the track fragment box 236. In other examples, the media data in a media data box can be described by metadata in the movie box 220. The metadata can refer to a particular media data by an absolute offset within the file 200, such that a media data header and/or free space within the media data box 238 can be skipped.

Other fragments 230b, 230c, through 230n in the ISO base media file 200 can contain boxes similar to those illustrated for fragment 230a, and/or can contain other boxes.

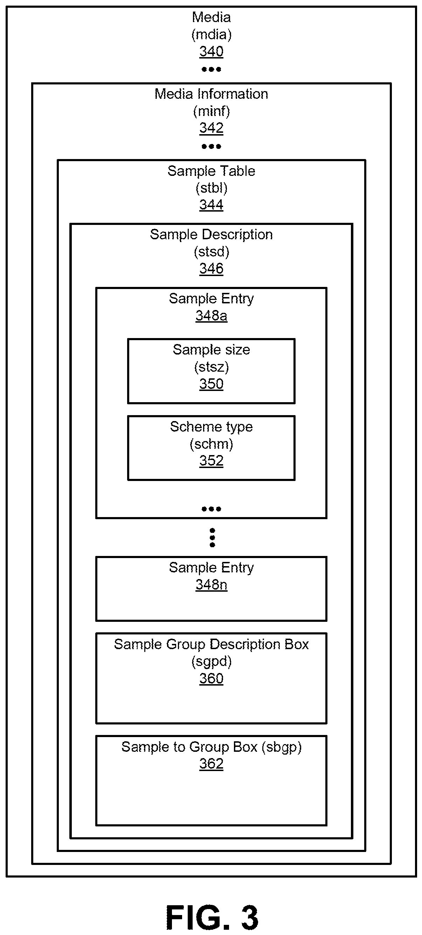

FIG. 3 illustrates an example of a media box 340 that can be included in an ISO base media file. As discussed above, a media box can be included in a track box, and can contain objects and information that describe media data in the track. In the illustrated example, the media box 340 includes a media information box 342. The media box 340 can also include other boxes, which are not illustrated here.

The media information box 342 can contain objects that describe characteristic information about the media in the track. For example, the media information box 342 can include a data information box, which describes the location of media information in the track. As another example, the media information box 342 can include a video media header, when the track includes video data. The video media header can contain general presentation information that is independent of the coding of the video media. The media information box 342 can also include a sound media header when the track includes audio data.

The media information box 342 can also include a sample table box 344, as provided in the illustrated example. The sample table box 344, identified by the box type "stbl," can provide locations (e.g., locations with a file) for the media samples in the track, as well as time information for the samples. Using the information provided by the sample table box 344, a player device can locate samples in correct time order, determine the type of a sample, and/or determine the size, container, and offset of a sample within a container, among other things.

The sample table box 344 can include a sample description box 346, identified by the box type "stsd." The sample description box 346 can provide detailed information about, for example, the coding type used for a sample, and any initialization information needed for that coding type. The information stored in the sample description box can be specific to a type of the track that includes the samples. For example, one format may be used for the sample description when the track is a video track and a different format may be used when the track is a hint track. As a further example, the format for the sample description may also vary depending on the format of the hint track.

The sample description box 346 can include sample entry boxes 348a through 348n. The sample entry is an abstract class, and thus typically the sample description box includes a specific sample entry box, such as a visual sample entry for video data or an audio sample entry for audio samples, among other examples. Each visual sample entry for video data may include one or more video frames. A sample entry box can store the parameters for a particular sample. For example, for a video sample, the sample entry box can include a width, height, horizontal resolution, vertical resolution, frame count, and/or depth for the video sample, among other things. As another example, for an audio sample, the sample entry can include a channel count, a channel layout, and/or a sampling rate, among other things.

In the illustrated example, the first sample entry 348a includes a sample size box 350, identified by the sample size box type "stsz". The sample size box can indicate a number of bytes of the sample. For example, for a visual sample, the sample size may indicate a number of bytes of data included in one or more video frames of the visual sample. The first sample entry 348a also includes a scheme type box 352, identified by the scheme box type "schm", which can define a sample entry type to indicate a type of the data of the sample. The sample entry type information can assist a decoder in determining about how to handle the sample data.

In addition to the sample entry boxes, sample description 346 may further includes a sample group description box 360 (identified by the sample group description box type "sgpd") and a sample to group box 362 (identified by the sample to group box type "sbgp"). Both sample group description box 360 and sample to group box 362 can be part of a sample grouping mechanism to group a set of sample entries based on pre-determined characteristics associated with sample group description box 360. For example, sample group description box 360 may include a pre-determined grouping type entry. Sample entries that are associated with that pre-determined grouping type (based on certain common characteristics shared by the sample entries) can be mapped to that grouping type entry in sample to group box 362.

The ISOBMFF includes support for streaming media data over a network, in addition to supporting local playback of the media. The file or files that include one movie presentation can include additional tracks, called hint tracks, which contain instructions that can assist a streaming server in forming and transmitting the file or files as packets. These instructions can include, for example, data for the server to send (e.g., header information) or references to segments of the media data. A file can include separate hint tracks for different streaming protocols. Hint tracks can also be added to a file without needing to reformat the file.

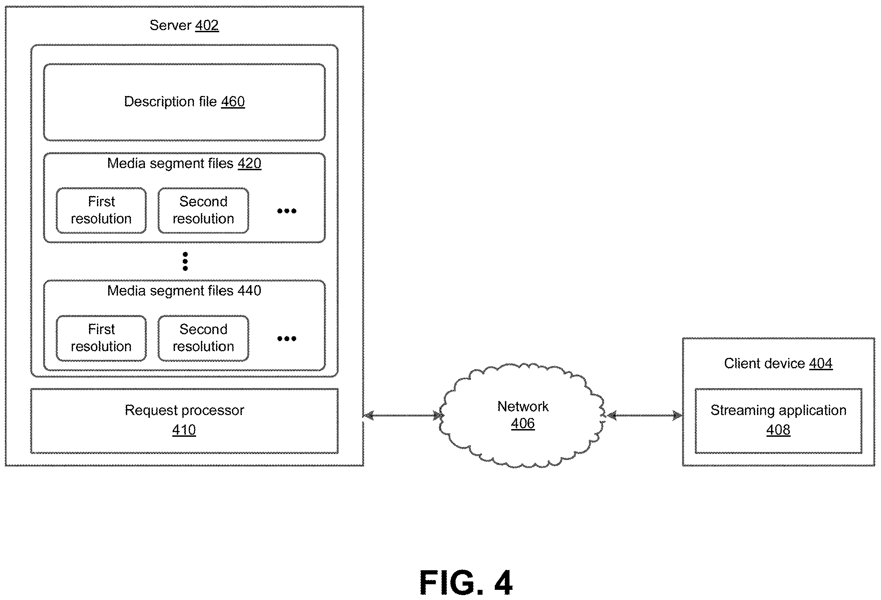

Reference is now made to FIG. 4, which illustrates an example system 400 for streaming. System 400 includes a server 402 and a client device 404 communicatively coupled with each other over network 406 based on a networking protocol. For example, server 402 can include a conventional HTTP web server, whereas client device 404 may include a conventional HTTP client. An HTTP communication channel can be established, and can be used by a client device 404 to transmit an HTTP request to the server 402 to request certain network resources. The HTTP communication channel can be used by the server 402 to transmit an HTTP response back to client device 404 including the requested network resources. One network resource hosted by server 402 can be media content, which can be divided into media segments. Client device 404 may include a streaming application 408 to establish a streaming session with server 402 over network 406. During the streaming session, streaming application 408 may transmit a request for one or more media segments to a request processor 410 of server 402 over network 406. The streaming application 408 can receive the requested one or more media segments, and can render some or all of the received media segments on client device 404, before transmitting a subsequent request for subsequent media segments. Using such an arrangement, streaming application 408 need not wait until downloading of the entire media content has completed before rendering the media content at client device 404, which can facilitate utilization of the network resources and improve user experience.

To enable high quality streaming of media content using conventional HTTP web servers, adaptive bitrate streaming can be used. Under adaptive bitrate streaming, for each media segment, client device 404 can be provided with information about a set of alternative segment files 420 and 440. Here, a media segment may refer to portion of a media bitstream associated with a particular playing timestamp and duration. Each sets of alternative segment files 420 and 440 may correspond to a particular representation of the media segment (e.g., associated with a particular playing timestamp and duration). A representation may refer to a particular result of encoding certain media content (e.g., with a particular bitrate, frame rate, screen size, and/or other suitable media characteristics). Here, different representations of a media segment may refer to different results of encoding the media content of that media segment. A representation may include one or more sub-representations. A sub-representation may include, for example, information specifying the encoding result (e.g., codec, language, embedded lower quality video layer, and/or other media characteristics) that can be used for decoding and/or extracting media content from the segment files of a representation. Among each set of alternative segment files, each media segment file can be associated with a set of properties including, for example, a particular bitrate, frame rate, resolution, audio language, and/or other suitable media characteristics specified in the sub-representations. Based on local information (e.g., bandwidth of network 406, decoding/displaying capabilities of client device 404, user preference, etc.), streaming application 408 can select, for each representation, a particular media segment file from the set. As an illustrative example, client device 404 may transmit a request for a media segment file associated with a first resolution from media segment files 420. Subsequently, due to a change in the bandwidth of network 406, the client device 404 may transmit another request for a media segment file associated with a second resolution.

The information about the set of alternative segment files 420 and 440 can be part of a description file 460 maintained by server 402. The client device 404 can obtain the description file 460 from the server 402, and can transmit requests for the media segment files based on the description file 460. The description file 460 may include, for example, a list of a set of alternative media segment files for each representation of the media content, as well as the properties associated with each alternative media segment file (e.g., bitrate, frame rate, resolution, audio language, and/or other suitable media characteristics). The list also includes location identifiers (e.g., Uniform Resource Locator (URL), Uniform Resource Indicator (URI), and/or other suitable identifiers) associated with the storage locations of the alternative segment files.

There exist various protocols for adaptive bitrate streaming. One example is Dynamic Adaptive Streaming over HyperText Transfer Protocol (HTTP), or DASH (defined in ISO/IEC 23009-1:2014), which is also known as MPEG-DASH. Under DASH, the description file 460 can include a media presentation description (MPD) file.

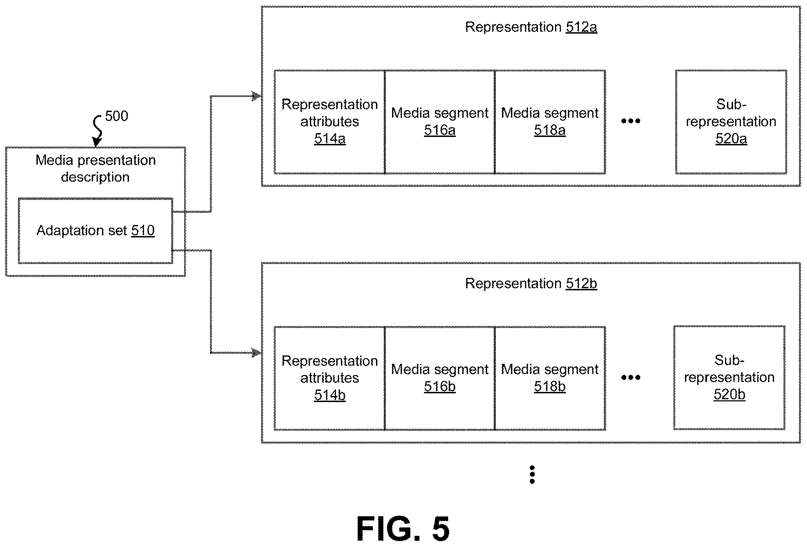

FIG. 5 provides an example of an MPD 500. As shown in FIG. 5, the MPD 500 includes one or more adaptation sets (e.g., adaptation set 510) provided in a list representation. Adaptation set 510 may be associated with a start timestamp and a duration of playing, and can include a set of representations 512a and 512b. Each of the representations 512a and 512b can include a set of media segments. The media segments of the representation 512a and the media segments of the representation 512b may be encoded from the same content source, and may be associated with different bitrates, resolutions, frame rates, and/or other suitable media characteristics. For example, representation 512a includes media segments 516a and 518a, whereas representation 512b includes media segments 516b and 518b. Media segments 516a and 518a can be associated with a different media property (e.g., resolution, bitrate, or the like) than the media property of the media segments 516b and 518b.

Moreover, each representation can also include one or more sub-representations. For example, the representation 512a may include a sub-representation 520a, whereas the representation 512b may include a sub-representation 520b. As discussed above, a subrepresentation may include, for example, information specifying the encoding result (e.g., codec, language, embedded lower quality video layer, and/or other media characteristics) that can be used for decoding and/or extracting media content from the segment files of the representation that includes the sub-representation.

Further, each representation may also include attributes information that signals the media characteristics of the media segments included in the representation. For example, representation 512a includes representation attributes 514a, whereas representation 512b includes representation attributes 514b. Each of representation attributes 514a and 514b may include information including, for example, bandwidth, frame width, frame height, a combination thereof, and/or other attribute information.

An MPD can be represented in eXtensible Markup Language (XML). An MPD file in XML format may provide a list representation of the adaptation sets and include a set of elements to define each adaptation set. Each of the set of elements may be associated with a set of attributes which define the properties of, for example, the adaptation set, the representation, etc. Below is an example of part of MPD 500 of FIG. 5:

```
<Period duration="PT30S">
         <AdaptationSet mimeType="video/mp2t">
              <Representation id="720p" bandwidth="3200000" width="1280"
 height="720">
              <SubRepresentation contentComponent="1" bandwidth="526952"
 codecs="avc1.4d401e"/>
             <SegmentURL media=" segment-1 .DASH"/>
             <SegmentURL media="segment-2.DASH"/>
```

In the example above, texts such as "Period", "AdaptationSet", "Representation", "SubRepresentation", "SegmentURL", etc. are elements, whereas "duration", "mimeType", "id", "bandwidth", "width" and "height", "media", etc. are attributes. In this example, an adaptation set (e.g., adaptation set 510) can be associated with, for example, an mp2t video stream (based on the "mimeType" attribute) with a duration of 30 seconds (based on the "duration" attribute). Moreover, the adaptation set may include a representation (e.g., representation 512a) associated with a bandwidth of 3.2M, and with a frame width of 1280 and a frame height of 720. The bandwidth, frame width and frame height information can be included in representation attributes 514a. The representation may include a subrepresentation (e.g., sub-representation 520a) that specifies the codec and bandwidth for the audio components. The representation may also include a plurality of segments, each of which is represented by a URI that follows the "SegmentURL" element. The segments may be associated with the representation or grouped under different sub-representations.

Another examples for adaptive bitrate streaming is HTTP Live Streaming (HLS), which provides streaming of file segments associated with the Transport Stream (TS) format. Transport stream specifies a container format encapsulating packetized elementary streams (PES). Each PES comprises an encapsulation of sequential data bytes from a video or audio decoder into PES packets. Using HLS, a server can provide a set of playlist files, each of which includes links to a sequence of file segments in TS format and associated with a particular bitrate. A playlist file can be in the format of .m3u8 format, and includes a set of tags and attributes to provide a list representation of the media segment files. A variant playlist file can refer to a set of playlist files, each of which can be associated with a set of media segment files for the same presentation (e.g., a sequence of video frames), and each of the set of playlist file can be associated with a different bitrate. The receiver device can be provided with a variant playlist file and, based on the local condition (e.g., network bandwidth), selects the playlist file associated with a particular bandwidth, bitrate, frame rate, etc. The receiver device may then use the information of the selected playlist file to obtain the media segment files for streaming.

Below is an example of an HLS variant playlist:
#EXT-X-STREAM-INF:PROGRAM-ID=1,BANDWIDTH=300000, prog_200kbs.m3u
#EXT-X-STREAM-INF:PROGRAM-ID=1,BANDWIDTH=600000, prog_400kbs.m3u

Here, the texts "#EXT-X-STREAM-INF", is a tag which provide certain information and structure of the playlist. For example, "#EXT-X-STREAM-INF" indicates that the URL (e.g., "prog_200kbs.m3u") that follows is a playlist file. The tag can be associated with attributes as well. For example, #EXT-X-STREAM-INF:PROGRAM-ID=1,BANDWIDTH=300000" describes that the playlist is associated with video files with an upper bound of bitrate of 300000 bits per second and is associated with an presentation identifier of 1.

An example of a playlist file referred by the HLS variant playlist above can be as follows:
#EXTINF: 10.0,
   http://example.com/movie1/fileSequenceA.ts
#EXTINF: 10.0,
   http://example.com/movie1/fileSequenceB.ts

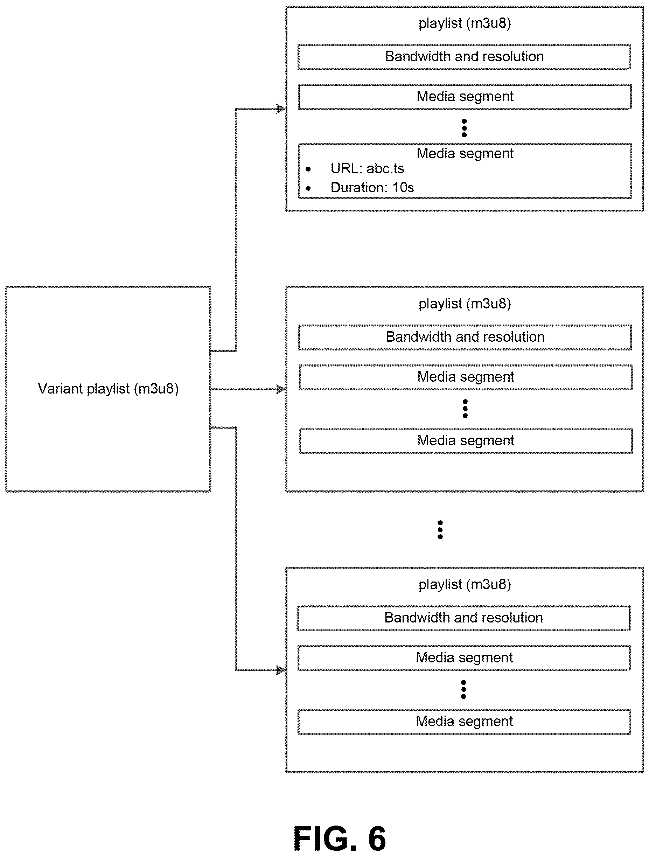

Here, the text "#EXTINF" is also a tag which provides certain information and structure of the playlist. For example, "#EXTINF" can be a record marker that describes the media file identified by the URL that follows it. The tag can be associated with attributes as well. For example, "#EXTINF:10.0" describes that the media segment file that follows has a 10-second duration. FIG. 6 provides a graphical representation of an example of a variant playlist file and a set of playlist files referenced by the variant playlist file. The playlist file may include information for each media segments, such as an URL ("abc.ts") and the associated duration (10 seconds).

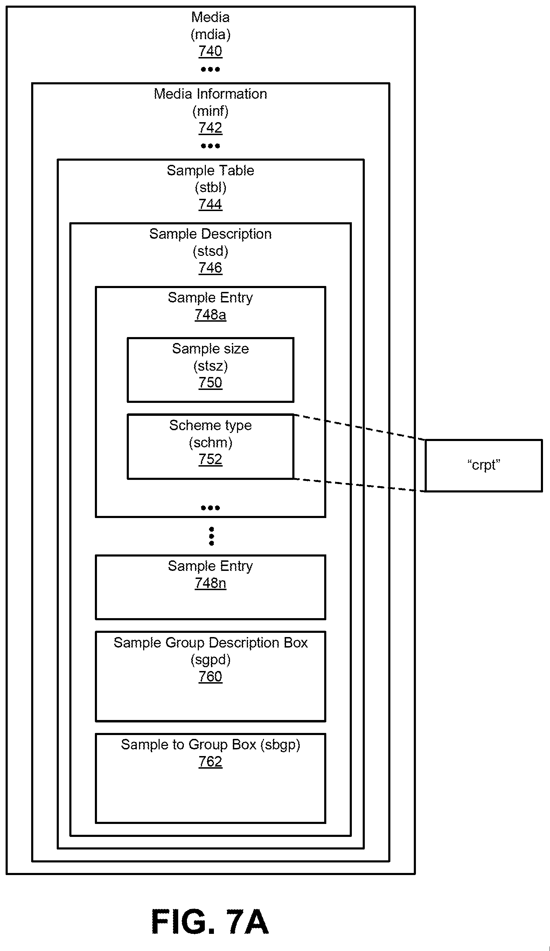

FIG. 7A illustrates an example of signaling corrupted frames in an ISO base media format (ISOBMFF) file. The media box 740 shown in FIG. 7A is an example of a media box that can be included in the ISOBMFF file. The ISOBMFF file can be generated or updated, for example, by a streaming server, by an intermediate network device between a hosting server and a receiver device, by a receiver device, or any other device that encapsulates encoded data into the media file. In the illustrated example, the media box 740 includes a media information box 742, which includes a sample table 744. Sample table 744 includes a sample description 746 (stsd), which in turn may include sample entries 748a through 748n, etc. Entry 748a may include a sample size box 750 (stsz) and a scheme type box 752 (schm). Optionally, sample description 746 may also include sample group description box 760 (sgpd) and sample to group box 762 (sbgp). Unless specified otherwise, the properties of these boxes can be identical to the corresponding boxes in FIG. 3, the descriptions of which are not repeated here.

In the example of FIG. 7A, sample entry 748a may include video samples that include one or more corrupted video frames. As previously noted, a corrupted media frame is a media frame that cannot be correctly decoded, due to video data of the corrupted frame being only partially received, due to missing data associated with or in the media frames that is used in the inter-frame prediction chain, or due to other factors causing a video frame to become non-decodable. If a decoder tries to decode a corrupted media frame, which is an unexpected behavior in the decoding process, the result can include a decoder crash, an error, or other negative outcome. To signal the existence of the corrupted video frames in sample entry 748a, scheme type box 752 of sample entry 748a may carry a sample entry type associated with corrupted video frames. The sample entry type can be identified by a four-letter code (in the example of FIG. 7A, the four-letter code can be defined as "crpt"). On the other hand, if sample entry 748a includes video samples with missing video frames, sample entry 748a may include another code identifier, such as "lost", "null", or other suitable code identifier to indicate the occurrence of missing video frames in that particular sample entry.

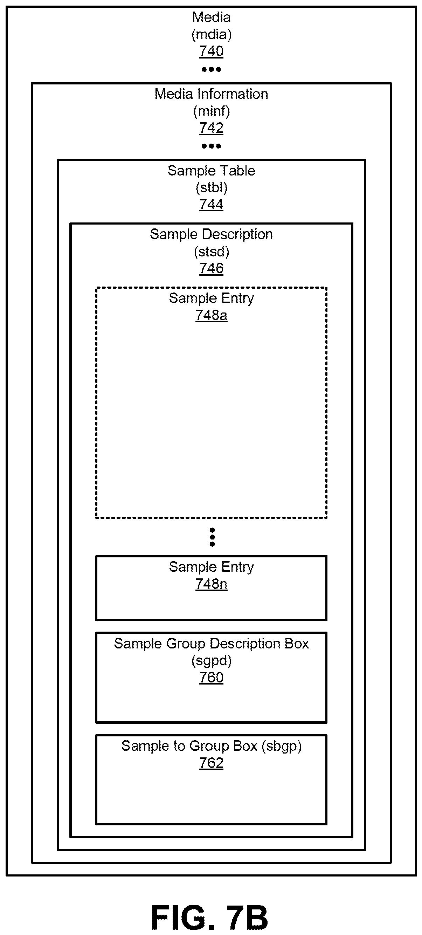

FIG. 7B illustrates another example of signaling corrupted frames in an ISOBMFF file. For example, a media box 740 can be included in an ISOBMFF file. Assuming all of the video frames of sample entry 748a are corrupted (i.e., none of the video frames of sample entry 748a can be decoded), an application that generates ISOBMFF files by encapsulating the encoded media bitstream can omit the video samples corresponding to sample entry 748a from the ISOBMFF file. That is, in the example of FIG. 7B, sample entry 748a is omitted from (and does not exist in) the sample table 744. The omission of sample entry 748a can be detected by the receiver device based on, for example, a gap in the location and time information of the sequence of samples listed in sample table box 744.

With the examples of FIGS. 7A and 7B, a receiver device can detect corrupted frames when depackaging the ISOBMFF file. Based on the sample entry type information, or the omission of a particular sample entry, the receiver device can directly obtain a precise file location of the corrupted video frame (e.g., which track and which sample that includes the corrupted video frame), as well as timing information of the video frames that are corrupted and not decodable. The receiver device can then perform pre-determined file handling procedures to handle the corrupted video frames in an efficient manner. For example, based on the indication of the corrupted media frames in the file, the receiver device does not need to perform other steps of computation to seek the corrupted video frames. For example, the receiver device does not need to convert byte location to track and timing information, or other conversion operations, to seek the precise file location of the corrupted video frame. Moreover, due to the indication of the corrupted frames, the receiver device also can be prevented from attempting to decode corrupted video frames, which can prevent a decoder crash, an error message, and/or other undesirable outcome that can harm the decoding process. All of these can facilitate proper handling of corrupted video frames and improve user experience.

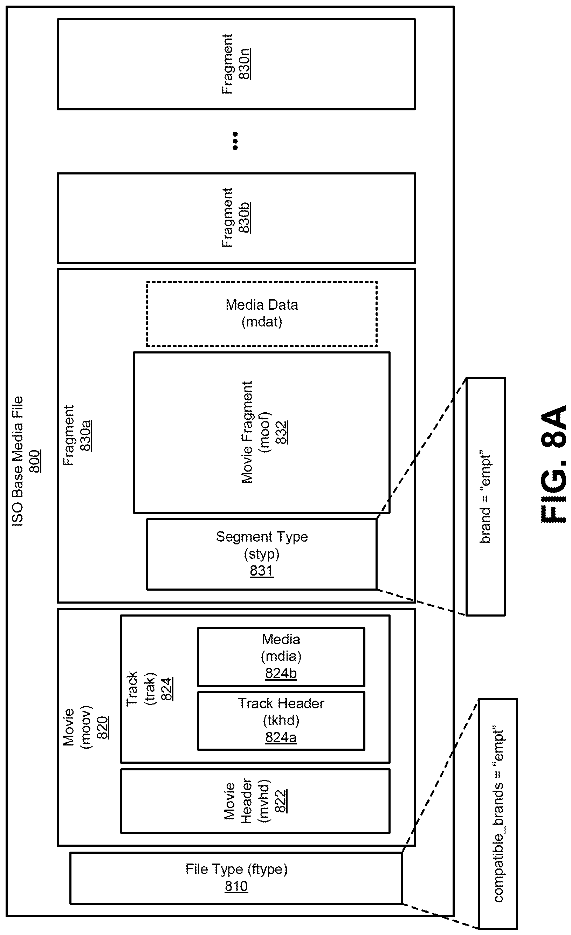

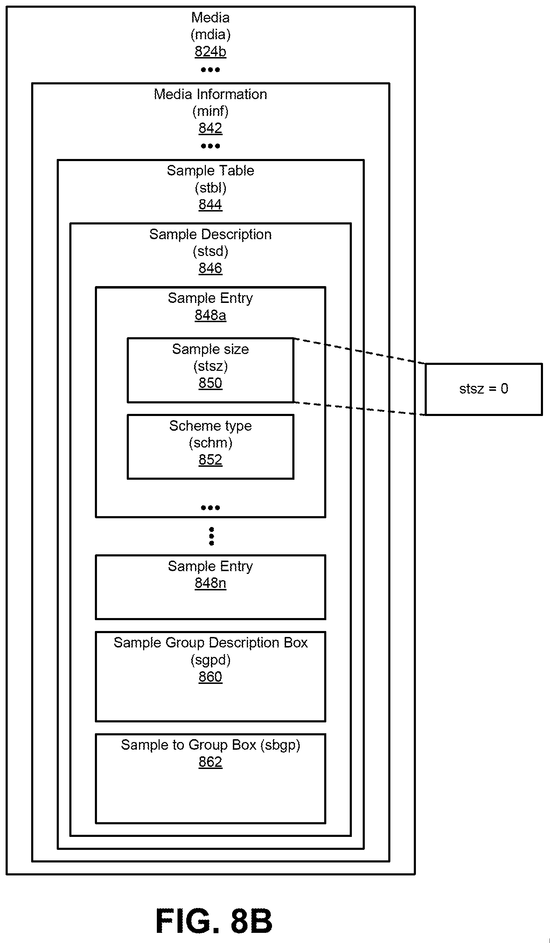

FIGS. 8A and 8B illustrate an example of signaling missing frames in an ISOBMFF file. FIG. 8A illustrates an example of a top level of ISO base media file 800. The ISO base media file can be generated or updated by, for example, a streaming server, an intermediate network between a hosting server and the receiver device, etc., that encapsulates encoded data into the media file. In the example of FIG. 8A, media file 800 can include a file type box 810, a movie box 820, and one or more movie fragment boxes 830a, 830b, through 830n. Other boxes that can be included at this level but that are not represented in this example include free space boxes, metadata boxes, and media data boxes, among others. Movie box 820 includes a movie header box 822, and can include one or more track boxes 824 as well as other boxes. Track box 824 includes a track header box 824a and a media box 824b. Fragment 830a includes a segment type box 831, and a movie fragment box 832. Unless specified otherwise, the properties of these boxes can be identical to the corresponding boxes in FIG. 2, the descriptions of which are not repeated here.

Assuming that fragment 830a contains an empty segment, segment type 831 can carry a brand identifier associated with an empty segment. The brand identifier can be one of compatible brands listed in file type 810. In the example of FIG. 8A, such a brand identifier can be a four-letter code "empt". In addition, the media data box associated with the empty segment can be omitted from fragment 830.

In addition, media 824b may also include an indicator to indicate the empty segment. Reference is now made to FIG. 8B, which illustrates an example of media box 824b of FIG. 8A. As shown in FIG. 8B, media box 824b includes a media information box 842, which includes a sample table 844. Sample table 844 includes a sample description 846, which in turn may include sample entries 848a, through 848n, etc. Entry 848a may include a sample size box 850 and a scheme type box 852. Optionally, sample description 846 may also include sample group description box 860 and sample to group box 862. Unless specified otherwise, the properties of these boxes can be identical to the corresponding boxes in FIG. 3, the descriptions of which are not repeated here.

Here, assuming that sample entry 848a is part of the empty segment defined by segment type 831 and movie fragment 832, sample size box 850 of sample entry 848a may carry a value of zero, to indicate that the sample has zero size.

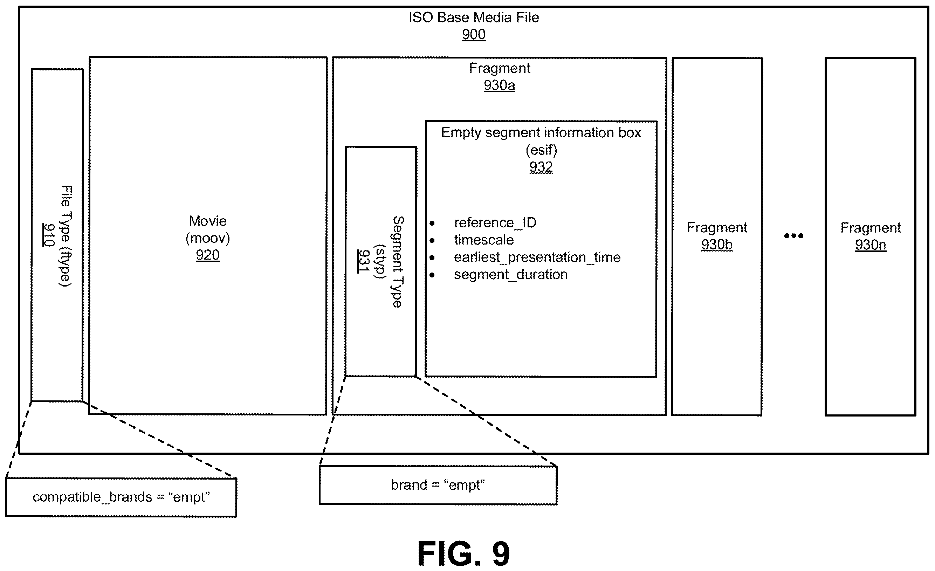

FIG. 9 illustrates an example of signaling missing frames in an ISOBMFF file. FIG. 9 illustrates an example of a top level of ISO base media file 900. The ISO base media file can be generated or updated by, for example, a streaming server, an intermediate network device between a hosting server and the receiver device, etc., that encapsulates encoded data into the media file. In the example of FIG. 9, media file 900 can include a file type box 910, a movie box 920, and one or more movie fragment boxes 930a, 930b, through 930n. Other boxes that can be included at this level but that are not represented in this example include free space boxes, metadata boxes, and media data boxes, among others. Unless specified otherwise, the properties of these boxes can be identical to the corresponding boxes in FIG. 2, the descriptions of which are not repeated here.

In example of FIG. 9, fragment 930a includes a segment type box 931, which carries the brand "empt" as in FIG. 8A. Fragment 930a also includes an empty segment information box 932. Empty segment information box 932 can include data representing a box type code "esif," and can be identified by the "esif' box type code. Empty segment information box 932 can be included in a fragment whenever the fragment includes an empty segment associated with segment type 931. The definition, syntax, and semantics of empty segment information box 932 ("EmptySegmentInfoBox"), some of which are illustrated in FIG. 9, can be as follows:

### Definition

| | |
|---|---|
| Box Type: | 'esif′ |
| Container: | File |
| Mandatory: | Yes for an Empty Media Segment |
| Quantity: | One |

### Syntax

```
         aligned(8) class Empty SegmentInfoBox extends FullBox('esif, version, 0) {
           unsigned int(32) reference_ID;
           unsigned int(32) timescale;
           if (version==0)
                  unsigned int(32) earliest_presentation_time;
           else
                  unsigned int(64) earliest_presentation time;
           unsigned int(32) segment_duration;
}
```

### Semantics

The reference_ID field can hold an unsigned 32-bit integer, and can provide the stream ID for the reference stream, where a stream is a track and a stream ID is the track ID of the track of the stream. A reference_ID can be used to determine which track the empty segment is located.

The timescale field can hold an unsigned 32-bit integer and defines the timescale, in ticks per second, for the earliest_presentation_time and segment_duration fields (to be discussed below) within this box. In one embodiment, the timescale defined in empty segment information box 932 can match the timescale of the reference stream or track, as well as the timescale field of the media header box (e.g., movie header 222 of FIG. 2) of the track.

The earliest_presentation_time field can hold either an unsigned 32-bit or 64-bit integer (depending on version). The earliest_presentation_time can provide the earliest presentation time of the Empty Media Segment that contains this box, in the timescale indicated in the timescale field.

The segment duration field can hold a difference value between the earliest presentation time of the next segment of the reference stream (or the end presentation time of the reference stream if this is the last segment of the reference stream) and the earliest presentation time of this empty segment. The duration is in the same units as the value held in the earliest_presentation_time field.

With the examples of FIG. 8A-FIG. 8B, and FIG. 9, a receiving device can also detect an empty segment (with missing video frames) when depackaging the ISOBMFF file by recognizing a segment type brand associated with empty segment (e.g., the code word "empt"). Moreover, the receiver device can also directly obtain precise location (e.g., which track) and timing information about the segments that are missing based on, for example, the sample size information (of FIG. 8B), the empty segment information box information (of FIG. 9), etc. This enables the receiver device to perform pre-determined handling procedures for the missing frames in an efficient manner. For example, the receiver device needs not perform other steps of computation to seek the missing video frames. The receiver device also can be prevented from attempting to decode the missing video frames. Preventing such operations by a receiver device can facilitate proper handling of missing video frames and improve user experience.

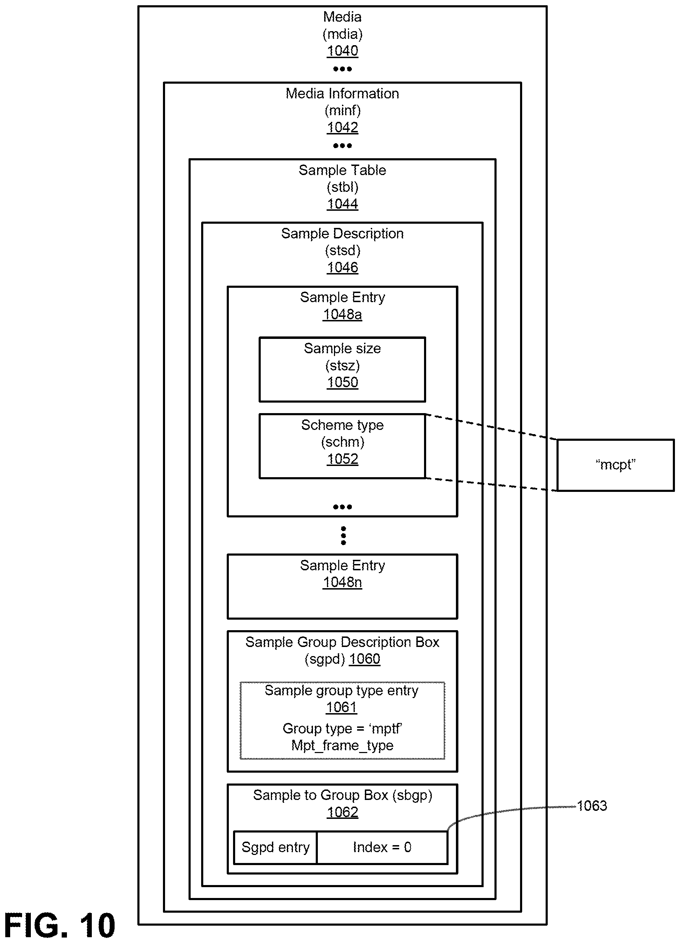

FIG. 10 illustrates an example of providing unified signaling of missing video frames or corrupted video frames in an ISOBMFF file. With unified signaling, a single indicator can be associated with both of missing video frames and corrupted video frames. The receiver device, upon detecting the single indicator, can determine that one or more video frames are either missing or corrupted, and can perform pre-determined handling procedures to handle (or process) the missing or corrupted video frames (e.g., by not decoding those video frames). Alternatively, the receiver device can also combine the single indicator with other information (e.g., zero sample size for missing frames and/or empty segments) to distinguish between missing frames and corrupted frames.

As shown in FIG. 10, an example of a media box 1040 of an ISO base media file is provided. The ISO base media file can be generated or updated by, for example, a streaming server, an intermediate network device between a hosting server and the receiver device, etc., that encapsulates encoded data into the media file. As shown in FIG. 10, media box 1040 includes a media information box 1040, which includes a sample table 1044. Sample table 1044 includes a sample description 1046, which in turn may include sample entries 1048a, through 1084n, etc. Entry 1048a may include a sample size box 1050 and a scheme type box 1052. Sample table 1044 further includes sample group description box 1060 and sample to group box 1062.

In the example of FIG. 10, sample entry 1048a may include video samples that include one or more corrupted video frames, one or more missing video frames, or any combination thereof. To signal the existence of the missing or corrupted video frames in sample entry 1048a, scheme type box 1052 of sample entry 748a may carry a sample entry type associated with both corrupted video frames and missing video frames. The sample entry type can be identified by a four-letter code (in the example of FIG. 10, the four-letter code is defined as "mcpt"). By identifying the four-letter code that signals the existence of the missing or corrupted video frames, the receiver device can directly obtain precise file location and timing information about the video frames (e.g., which sample of a track includes the corrupted video frames) that are either corrupted or missing (and not decodable), and can perform pre-determined file handling procedures in an efficient manner.

In addition, a new type of sample grouping can also be defined to indicate that the group includes samples associated with the sample entry type "mcpt". For example, as shown in FIG. 10, sample group description box 1060 can store a sample group type entry 1061. The sample group type entry ("MissingAndCorruptedFramesSampleEntry") can be associated with a four-letter code identifier (in the example of FIG. 10, "mptf'), and may be associated with the following definition and syntax:

### Definition

| | |
|---|---|
| Group Type:'mptf | |
| Container: | Sample Group Description Box ('sgpd') |
| Mandatory: | No |
| Quantity: | Zero or more |

### Syntax

```
class MissingAndCorruptedFramesSampleEntry() extends
 VisualSampleGroupEntry ('mptf)
         {
                  bit(6) reserved = 0;
                  unsigned int(2) mpt_frame_type;
         }
```

A sample group type entry may include an unsigned two-bit integer for mpt_frame_type. The value of mpt frame type can indicate a condition of the media frames in the samples of the sample group associated with the sample group description entry. For example, a value of 0 may indicate that the sample group do not include missing video frames nor corrupted video frames. A value of 1 may indicate that the sample group includes missing video frames. A value of 2 may indicate that the sample group indicates corrupted video frames. A value of 3 may indicate the condition of the media frames is unknown.

Moreover, sample to group box 1062 can include a mapping between the sample group type entries included in sample group description box 1060, and indices representing the sample entries. In the example of FIG. 10, sample to group box 1062 may include a mapping 1063 that maps sample group type entry 1061 to an index associated with sample entry 1048a, to indicate that the sample entry is part of a group of samples that share a common condition of video frames, as indicated by the mpt_frame_type value of the sample group.

With the example of FIG. 10, an unified signaling mechanism can be employed to indicate whether a sample group includes missing video frames, corrupted video frames, or have fully decodable video frames. The unified signaling mechanism provides a compact and efficient representation of the conditions of the video frames in a media file. This can simplify the design of a receiver device for interpreting and handling the signal.

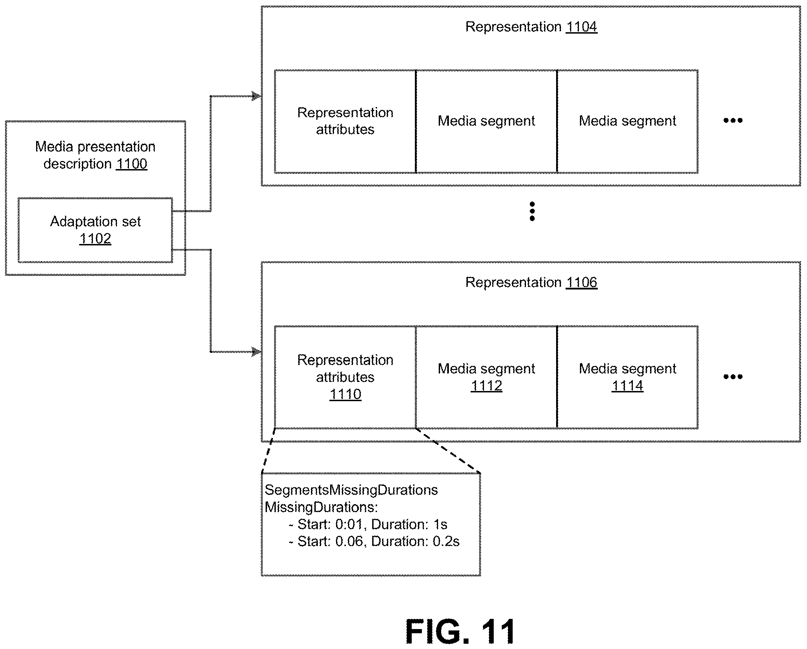

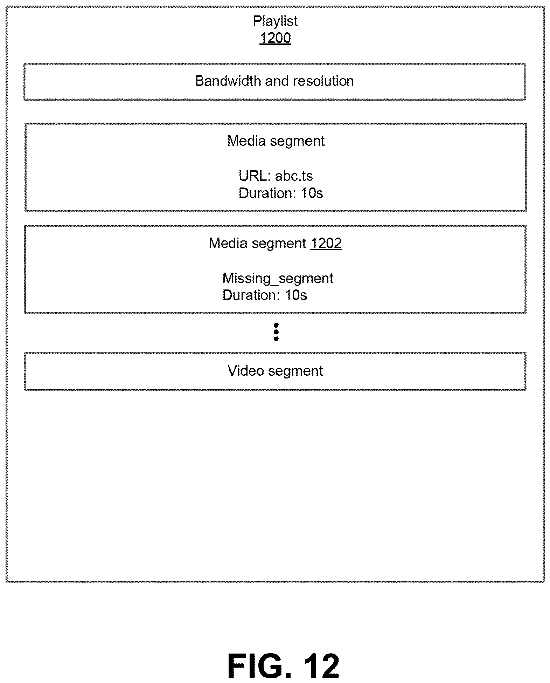

FIGS. 11 and 12 illustrate examples of signaling of missing file segments for media streaming. FIG. 11 illustrates an example of an MPD for DASH streaming, and FIG. 12 illustrates an example of a playlist file, or a CMAF file, for HLS streaming. The MPD, the playlist file, and the CMAF file can be generated or updated by a streaming server (e.g., server 402 of FIG. 4) that maintains the files. Alternatively, these files can also be generated or updated by a client device (e.g., client device 404 of FIG. 4). For example, a client device may have received a description file from a streaming server (a MPD, a playlist file, a CMAF file, or any suitable files) listing a set of media segment files to be downloaded by the client device. During a streaming session, the client device may download the set of media segment files according to the description file, and may determine that one or more of the downloaded media segment files contain missing or corrupted video frames (e.g., due to failure in decoding the downloaded media segment files). In such a case, the client device can update the MPD, the playlist file, the CMAF file, etc., based on the techniques to be disclosed in FIGS. 11 and 12, and use to the updated file to request for media segment files in the next streaming session, to avoid receiving media segment files with missing or corrupted video frames.

Reference is now made to FIG. 11, which illustrates a structure of an example of an MPD 1100 that signals missing media segment. MPD 1100 may include an adaptation set 1102, which includes a representation 1104 and a representation 1106. In the example of FIG. 11, representation 1106 includes representation attributes 1110, a media segment 1112, a media segment 1114, etc. Each of media segments 1112 and 1114 may be associated with a start time and a duration.

In the example of FIG. 11, media segment 1112 may be associated with a missing media segment file. MPD 1100 can include signaling information to indicate that media segment 1112 is associated with a missing media segment file. The missing media segment file can be associated with a representation or a sub-representation. For example, representation attributes 1110 of representation 1106 (which includes media segment 1112) may include an element "SegmentsMissingDurations" that specifies that there are segments missing, and time durations for those segments are to be signaled in the MPD. Representation attributes 1110 may also include an element "MissingDurations" that specifies the time durations for the missing elements. The time durations can be represented as a set of attributes associated with the "MissingDurations" element. In the example of FIG. 11, the missing media segments have a start time of 0:01 with a duration of 1 second, and a start time of 0.06 with a duration of 0.2 seconds. In some embodiments, the "SegmentsMissingDurations" and "MissingDurations" elements can also be part of a subrepresentation, to indicate the missing segments of the sub-representation. The semantics and syntax of "SegmentsMissingDurations" and "MissingDurations" can be as follows:

### Semantics

| Element or Attribute Name | Use | Description |
|---|---|---|
| SegmentMissDurations | | specifies the time durations during which Segments are missing. |
| MissDurations | 1 .. N | specifies a list of time durations during which Segments are missing. |
| @ start | M | specifies the start time, in @timescale units, of a time duration during which Segments are missing. |
| @duration | M | specifies the length, in units of the value of the @timescale, of the time duration during which Segments are missing. |
| Legend: | | |
| For attributes: M=Mandatory, O=Optional, OD=Optional with Default Value, CM=Conditionally Mandatory. For elements: <minOccurs>...<maxOccurs> (N=unbounded) attributes are non-bold and preceded with an @. | | |

### XML Syntax

```
<xs:complexType name="SegmentMissDurationsType">
  <xs:sequence>
    <xs:element name="MissDurations" minOccurs=" 1" maxOccurs="unbounded" >
     <xs:complexType>
      <xs:attribute name="start" type="xs:unsignedLong" use="required"/>
      <xs:attribute name="duration" type="xs:unsignedLong" use="required"/>
      <xs:anyAttribute namespace="##other" processContents="lax"/>
     </xs:complexType>
    </xs:element>
    <xs:any namespace="##other" processContents="lax" minOccurs="0"
 maxOccurs="unbounded"/>
  </xs:sequence>
  <xs:anyAttribute namespace="##other" processContents="lax"/>
 </xs:complexType>
```

Reference is now made to FIG. 12, which illustrates a structure of an example of a playlist file 1200 that signals missing media segment. Playlist file 1200 can also be a CMAF file (e.g., with the links to ISOBMFF files instead of Transport Stream (TS) files). In the example of FIG. 12, media segment 1202 includes a missing segment file. Playlist file 1200 may indicate such with a special tag "missing_segment" to indicate that media segment 1202 includes a missing segment file.

Using examples of FIGS. 11 and 12, a receiver device can determine, before transmitting a request for a media segment file, that the file is missing. For example, based on the "SegmentsMissingDurations" and MissDurations" elements of Fig. 11, and their associated attributes, a receiver device can identify the start time and duration information associated with segments with missing files. The receiver device can compare the start time and duration information of the missing segments against the start time and duration information of each of media segments 1112 and 1114, to determine that media segment 1112 is associated with a missing media segment file. Likewise, based on the "missing_segment" tag in FIG. 12, the receiver device can also determine that media segment 1202 is associated with a missing media segment file. In both cases, the receiver can then perform a pre-determined handling procedure including, for example, obtaining a corresponding media segment from another representation (e.g., representation 1104) in place of media segment 1112, or from another playlist to obtain an alternative presentation of media segment 1202.

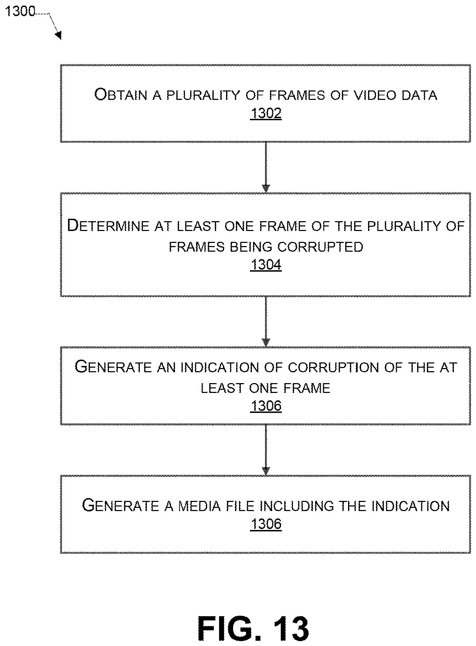

FIG. 13 illustrates an example of a process 1300 for processing video data. The process can be performed by, for example, a streaming server (e.g., server 402 of FIG. 4), an intermediate network device between a hosting server and a receiver device, or other suitable device, that encapsulates encoded data in a media file (e.g., an ISOBMFF file). The process can also be performed by a client device (e.g., client device 404 of FIG. 4) that streams video data from a streaming server using a description file (e.g., a MPD, a playlist file, a CMAF file, or any suitable files).

At block 1302, the process 1300 includes obtaining a plurality of frames of video data. The plurality of frames obtained by the process can be the result of encoding and/or compressing of the video data using a video codec. The video data may include a plurality of video samples, in which case each of the plurality of video samples includes one or more frames of the plurality of frames. In some embodiments, each of the video samples may be associated with a type identifier that identifies a type of the content included in the each of the video samples. The plurality of frames of video data, as received by the process, can be in one or more ISO format media files (e.g., ISOBMFF). The plurality of frames of video data can be in one or more media segment files obtained based on the aforementioned description file.

At block 1304, the process 1300 includes determining at least one frame of the plurality of frames being corrupted. For example, the process 1300 can determine that the at least one frame of the plurality of frames is corrupted. The video data can include first data corresponding to the at least one frame of the plurality of frames, in which case the first data is insufficient for decoding the at least one frame properly. As discussed above, a corrupted frame may occur in different ways. In some cases, a frame may become corrupted when part of the encoded data for that frame is lost. In some cases, a frame may become corrupted when the frame is part of an inter-frame prediction chain, and some other encoded data of the inter frame prediction chain is lost such that the frame cannot be correctly decoded. For example, the at least one frame can be part of an inter-frame prediction chain, and the video data can includes first data corresponding to the inter-frame predication chain. In such cases, the first data is insufficient for decoding the at least one frame properly. In some cases, the encoded media data can become corrupted (e.g., due to media file corruption), or even missing, before being encapsulated for transmission at a server. In some cases, an encoder (or a transcoder) may crash or fail in the midst of encoding the media data. The encoder failure may lead to some frames not being encoded (and not included) in the encoded data, causing the encoded data to include missing frames. The encoder failure may also lead to partial encoding of frames and inclusion of the partial data in the encoded data. If the partial data is not sufficient to decode the frames properly, the encoded data may also include corrupted frames.

There are different ways by which the system (e.g., a streaming server) determines the at least one frame of the plurality of frames is corrupted. For example, the streaming server may receive the video data from another video source (e.g., a content server) in the form of network packets, and the streaming server can determine that data loss occur during the transmission of the video data based on, for example, that some network packets have been lost in the transmission, that errors have been introduced in the payloads of the network packets (e.g., based on error-correction codes) and the errors cannot be corrected, etc. Based on the size of the lost data, as well as the location of the lost data within the video data, the streaming server can further determine whether the video data includes a corrupted frame (e.g., when the data received from the network packets cannot be used to decode a frame property), and identify the corrupted frame. As another example, the streaming server may employ an encoder to generate a video file by encoding the data representing a set of images, and the encoder may crash when attempting to encode a frame that including corrupted data. The encoder may provide an indication to the streaming server about the frames that lead to the crashing. The streaming server may then determine there are corrupted frames, and identify the corrupted frames, based on the indication from the encoder.

As another example, during a streaming session, the client device may download the set of media segment files according to the description file, and may determine that one or more of the downloaded media segment files contain corrupted video frames (e.g., due to failure in decoding the media segment files).

At block 1306, the process 1300 includes generating an indication of corruption of the at least one frame. The indication can be in a form according to the examples described herein including, for example, FIGS. 7A-FIG. 12.

In some embodiments, the indication can be part of an ISO format file. In one example, the indication can be provided by a type identifier (e.g., a code identifier associated with a sample entry type) associated with a video sample that includes the corrupted at least one frame, as discussed with respect to FIG 7A. In another example, the indication can be provided by an omission of one or more sample entries corresponding to corrupted video frames, as discussed with respect to FIG. 7B. In yet another example, as discussed with respect to FIG. 10, a unified sample type identifier associated with both of missing and corrupted video frames can be used to provide the indication. Further, a unified sample group type identifier can be used to indicate that a video sample group (associated with the sample group type identifier) includes corrupted/missing video frames. A sample to group box that maps the unified sample group type identifier to video samples containing corrupted/missing sample group can also be included to provide the indication of which of the video samples includes corrupted/missing video frames.

In some embodiments, the indication can also be part of the aforementioned description file for streaming application. For example, a streaming server may generate the description file to indicate one or more media segments included in the description file are missing (and/or corrupted). In another example, a client device may generate an updated description file, from the original description file obtained at block 1302, to indicate which of media segments included in the original description file is missing (and/or corrupted). In one example, the description file can be an MPD file and can include pre-determined elements and attributes to specify that there are media segments missing, and time durations for those segments. In another example, the description file can be a playlist file and can include pre-determined tags to indicate a missing segment file, or a segment file with corrupted data.

At block 1308, the process 1300 includes generating a media file including the indication determined at block 1306. The media file can be an ISOBMFF file, a description file for streaming application (e.g., MPD, playlist, CMAF, etc.), etc.

As noted above, the video data can include a plurality of video samples, with each of the plurality of video samples including one or more frames of the plurality of frames. The plurality of video samples can include a first video sample that includes the corrupted at least one frame. The first video sample is associated with a type identifier that identifies a type of content included in the first video sample. In this case, the indication may include the type identifier. The type identifier can indicate that the first video sample includes the at least one of the corrupted frames. The type identifier may also indicate a media type and a type of decoder used to process the media file. In some cases, the type identifier includes a sample entry type.

In some examples, the media file may include a list representation of a plurality of segments of the video data. In one example, the plurality of segments may include a first segment and a second segment. The first segment and the second segment may include one or more frames of the plurality of frames. The second segment also can include one or more missing frames of the plurality of frames. For example, the missing frames that are not provided in the file are meant to be part of the second segment, but were not included in the file. The indication noted above may be referred to as a first indication. In such examples, the process 1300 can further include determining that the second segment includes the one or more missing frames, and generating a second indication that provides an indication of the one or more missing frames. The process 1300 can add (or include) the second indication in the media file.

In some examples, the media file includes a media presentation description (MPD) format file. The list representation referred to above can include one or more adaption sets, with each of the one or more adaption sets including one or more representations and/or one or more sub-representations containing the video data that has the one or more missing frames. Each of the one or more representations or the one or more sub-representation are associated with one or more segments. The second indication can include one or more elements associated with the one or more missing frames for the one or more representations or the one or more sub-representations. The one or more elements are associated with a set of attributes including a timestamp and a duration of the second segment.

In some implementations, the list representation includes information for retrieving the first segment but not the second segment. In such cases, the second indication comprises an omission of information for retrieving the second segment. In some implementations, the list representation includes a text indicator associated with the second segment. The text indicator may indicate that the second segment includes the one or more missing frames. In such implementations, the second indication can include the text indicator.

In some examples, the media file is based on a HTTP Live Streaming (HLS) playlist format. In such cases, each segment of the plurality of segments is associated with a Transport Stream (TS) file, and the list representation can include a set of tags. In such cases, the text indicator is a tag of the set of tags associated with the second segment.

In some examples, the media file is based on a common media application format (CMAF) and includes a playlist. Each segment of the plurality of segments is associated with ISOBMFF. The list representation may include a set of tags, and the text indicator is a tag of the set of tags associated with the second segment.

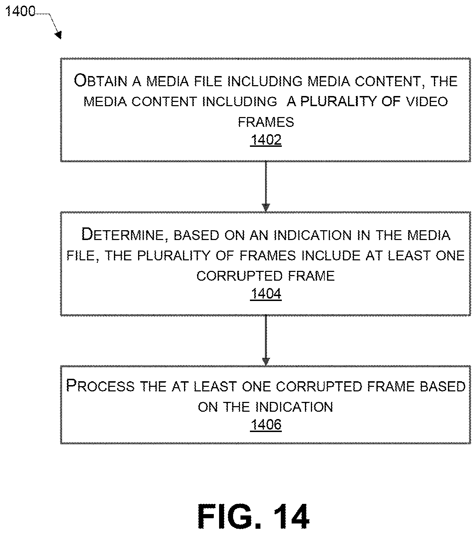

FIG. 14 illustrates an example of a process 1400 for processing a media file data. The process can be performed by, for example, a receiver device of the media file data. The receiver device can be any device that receives and decodes the encoded video data included in a media file. The receiver device can be, for example, a client device (e.g., client device 404 of FIG. 4)., an intermediate network device between a hosting server and the client device, or other suitable device.

At block 1402, the process 1400 includes obtaining a media file including media content. The media content includes a plurality of frames of video data. The media file may be a file (e.g., an ISOBMFF file) that encapsulates the media content, or a description file for a streaming application (e.g., MPD, playlist, CMAF, etc.) that links one or more media content segment files. The plurality of frames in the media file can be the result of encoding and/or compressing of the video data using a video codec. The video data may include a plurality of video samples, and each of the plurality of video samples includes one or more frames of the plurality of frames. In some embodiments, each of the video samples may be associated with a type identifier that identifies a type of the content included in the each of the video samples. The plurality of frames of video data, as received by the process, can be in one or more ISO format media files (e.g., ISOBMFF). The plurality of frames of video data can be in one or more media segment files obtained based on the aforementioned description file.

At block 1404, the process 1400 includes determining, based on an indication in the media file, the plurality of frames include at least one corrupted frame. The media content can include first data corresponding to the at least one frame of the plurality of frames, in which case the first data is insufficient for decoding the at least one frame properly. As discussed above, a corrupted frame may occur in different ways. In some cases, a frame may become corrupted when part of the encoded data for that frame is lost. In some cases, a frame may become corrupted when the frame is part of an inter-frame prediction chain, and some other encoded data of the inter frame prediction chain is lost such that the frame cannot be correctly decoded. For example, the at least one frame can be part of an inter-frame prediction chain, and the video data can includes first data corresponding to the inter-frame predication chain. In such cases, the first data is insufficient for decoding the at least one frame properly. In some cases, the encoded media data can become corrupted (e.g., due to media file corruption), or even missing, before being encapsulated for transmission at a server. In some cases, an encoder (or a transcoder) may crash or fail in the midst of encoding the media data. The encoder failure may lead to some frames not being encoded (and not included) in the encoded data, causing the encoded data to include missing frames. The encoder failure may also lead to partial encoding of frames and inclusion of the partial data in the encoded data. If the partial data is not sufficient to decode the frames properly, the encoded data may also include corrupted frames.

The determination in block 1404 can be based on an indication that signals corrupted or missing video frame. The indication can be in a form according to the examples described herein including, for example, FIGS. 7A-FIG. 12. In some embodiments, the indication can be part of an ISO format file. In on example, the indication can be provided by a type identifier (e.g., a code identifier associated with a sample entry type) associated with a video sample that includes the corrupted at least one frame, as discussed with respect to FIG 7A. In another example, the indication can be provided by an omission of one or more sample entries corresponding to corrupted video frames, as discussed with respect to FIG. 7B. In yet another example, as discussed with respect to FIG. 10, a unified sample type identifier associated with both of missing and corrupted video frames can be used to provide the indication. Further, a unified sample group type identifier can be used to indicate that a video sample group (associated with the sample group type identifier) includes corrupted video frames. A sample to group box that maps the unified sample group type identifier to video samples containing corrupted sample group can also be included to provide the indication of which of the video samples includes corrupted video frames. Based on the indication, the system can identify, for example, a video sample of the media file that includes the corrupted video frames.

In some embodiments, the indication can also be part of the aforementioned description file for streaming application, to indicate which of media segments included in the original description file is corrupted (or missing). In one example, the description file can be an MPD file and can include pre-determined elements and attributes to specify that there are media segments that are corrupted and unavailable for streaming, and time durations for those segments. In another example, the description file can be a playlist file and can include pre-determined tags to indicate a corrupted (and/or missing) segment file. Based on the indication, the system can identify, for example, a presentation, or a representation/sub-representation that includes a media segment with the corrupted video frames.

At block 1406, the process 1400 includes processing the determined at least one corrupted frame based on the indication. For example, based on identifying a video sample that includes the corrupted video frames, the system may skip the decoding of that video sample. For instance, the process 1400 can identify, based on the indication, a portion of the media content corresponding to the corrupted at least one frame, and can skip processing of the portion of the media content. As another example, based on identifying a presentation/representation/sub-representation that includes a media segment with the corrupted video frames, requesting an alternative presentation/representation/sub-representation. The alternative presentation/representation/sub-representation may be requested from a different source and may be associated with the same or different media characteristics as the presentation/representation/sub-representation including the corrupted media segment.

As noted above, the video data can include a plurality of video samples, with each of the plurality of video samples including one or more frames of the plurality of frames. The plurality of video samples can include a first video sample that includes the corrupted at least one frame. The first video sample is associated with a type identifier that identifies a type of content included in the first video sample. In this case, the indication may include the type identifier. The type identifier can indicate that the first video sample includes the at least one of the corrupted frames. The type identifier may also indicate a media type and a type of decoder used to process the media file. In some cases, the type identifier includes a sample entry type.

In some examples, the media file includes a list representation of a plurality of segments of the video data. In one example, the plurality of segments may include a first segment and a second segment. The first segment and the second segment may include one or more frames of the plurality of frames. The second segment can also include one or more missing frames of the plurality of frames. The indication noted above may be referred to as a first indication, in which case the media file can further include a second indication to indicate that the second segment includes the one or more missing frames of the plurality of frame.

In some examples, the media file includes a media presentation description (MPD) format file. The list representation referred to above can include one or more adaption sets, with each of the one or more adaption sets including one or more representations and/or one or more sub-representations containing the video data that has the one or more missing frames. Each of the one or more representations or the one or more sub-representation are associated with one or more segments. The second indication can include one or more elements associated with the one or more missing frames for the one or more representations or the one or more sub-representations. The one or more elements are associated with a set of attributes including a timestamp and a duration of the second segment.

In some implementations, the list representation includes information for retrieving the first segment but not the second segment. In such cases, the second indication comprises an omission of information for retrieving the second segment. In some implementations, the list representation includes a text indicator associated with the second segment. The text indicator may indicate that the second segment includes the one or more missing frames. In such implementations, the second indication can include the text indicator.

In some examples, the media file is based on a HTTP Live Streaming (HLS) playlist format. In such cases, each segment of the plurality of segments is associated with a Transport Stream (TS) file, and the list representation can include a set of tags. In such cases, the text indicator is a tag of the set of tags associated with the second segment.

In some examples, the media file is based on a common media application format (CMAF) and includes a playlist. Each segment of the plurality of segments is associated with ISOBMFF. The list representation may include a set of tags, and the text indicator is a tag of the set of tags associated with the second segment.

In some aspects, the process 1400 can process the at least one corrupted frame based on the indication by transmitting a request to a stream server to request a third segment in place of the second segment.

Processes 1300 and 1400 are illustrated as logical flow diagrams, the operation of which represent a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the processes 1300 and 1400 may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory. The computer systems may include, for example, video source 102, encoding device 104, decoding device 112, and video destination device 122 of FIG. 1, as well as server 402 and client device 404 of Fig. 4.

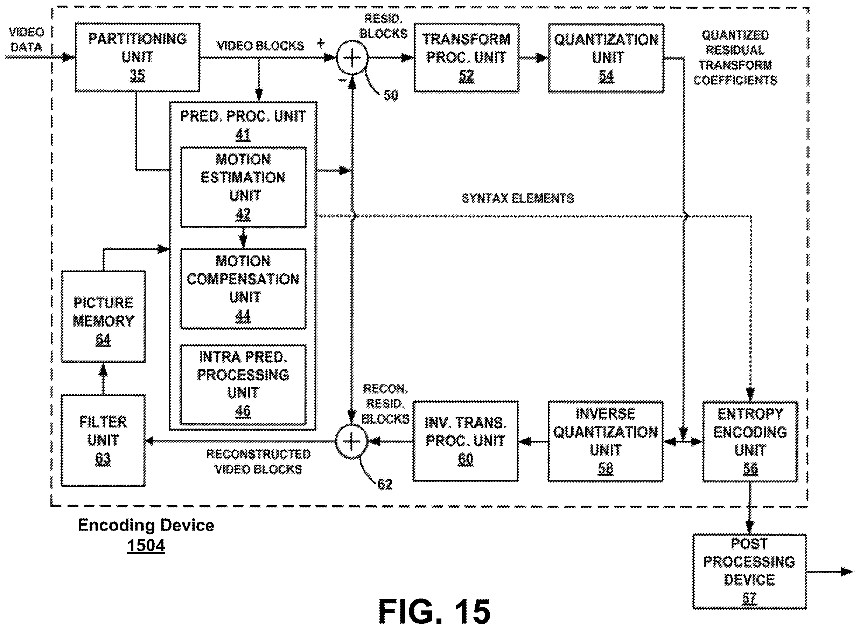

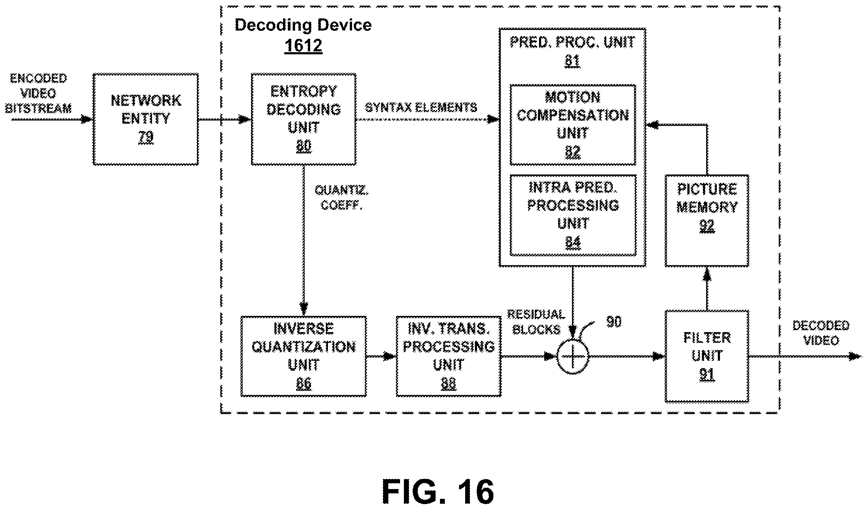

Specific details of an encoding device 1504 and a decoding device 1612 are shown in FIG. 15 and FIG. 16, respectively. FIG. 15 is a block diagram illustrating an example encoding device 1504 that may implement one or more of the techniques described in this disclosure. Encoding device 1504 may, for example, generate the syntax structures described herein (e.g., the syntax structures of a VPS, SPS, PPS, or other syntax elements). Encoding device 1504 may perform intra-prediction and inter-prediction coding of video blocks within video slices. As previously described, intra-coding relies, at least in part, on spatial prediction to reduce or remove spatial redundancy within a given video frame or picture. Inter-coding relies, at least in part, on temporal prediction to reduce or remove temporal redundancy within adjacent or surrounding frames of a video sequence. Intra-mode (I mode) may refer to any of several spatial based compression modes. Inter-modes, such as uni-directional prediction (P mode) or bi-prediction (B mode), may refer to any of several temporal-based compression modes.

The encoding device 1504 includes a partitioning unit 35, prediction processing unit 41, filter unit 63, picture memory 64, summer 50, transform processing unit 52, quantization unit 54, and entropy encoding unit 56. Prediction processing unit 41 includes motion estimation unit 42, motion compensation unit 44, and intra-prediction processing unit 46. For video block reconstruction, encoding device 1504 also includes inverse quantization unit 58, inverse transform processing unit 60, and summer 62. Filter unit 63 is intended to represent one or more loop filters such as a deblocking filter, an adaptive loop filter (ALF), and a sample adaptive offset (SAO) filter. Although filter unit 63 is shown in FIG. 12 as being an in-loop filter, in other configurations, filter unit 63 may be implemented as a post loop filter. A post processing device 57 may perform additional processing on encoded video data generated by encoding device 1504. The techniques of this disclosure may in some instances be implemented by encoding device 1504. In other instances, however, one or more of the techniques of this disclosure may be implemented by post processing device 57.

As shown in FIG. 15, encoding device 1504 receives video data, and partitioning unit 35 partitions the data into video blocks. The partitioning may also include partitioning into slices, slice segments, tiles, or other larger units, as well as video block partitioning, e.g., according to a quadtree structure of LCUs and CUs. Encoding device 1504 generally illustrates the components that encode video blocks within a video slice to be encoded. The slice may be divided into multiple video blocks (and possibly into sets of video blocks referred to as tiles). Prediction processing unit 41 may select one of a plurality of possible coding modes, such as one of a plurality of intra-prediction coding modes or one of a plurality of inter-prediction coding modes, for the current video block based on error results (e.g., coding rate and the level of distortion, or the like). Prediction processing unit 41 may provide the resulting intra- or inter-coded block to summer 50 to generate residual block data and to summer 62 to reconstruct the encoded block for use as a reference picture.

Intra-prediction processing unit 46 within prediction processing unit 41 may perform intra-prediction coding of the current video block relative to one or more neighboring blocks in the same frame or slice as the current block to be coded to provide spatial compression. Motion estimation unit 42 and motion compensation unit 44 within prediction processing unit 41 perform inter-predictive coding of the current video block relative to one or more predictive blocks in one or more reference pictures to provide temporal compression.

Motion estimation unit 42 may be configured to determine the inter-prediction mode for a video slice according to a predetermined pattern for a video sequence. The predetermined pattern may designate video slices in the sequence as P slices, B slices, or GPB slices. Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a prediction unit (PU) of a video block within a current video frame or picture relative to a predictive block within a reference picture.

A predictive block is a block that is found to closely match the PU of the video block to be coded in terms of pixel difference, which may be determined by sum of absolute difference (SAD), sum of square difference (SSD), or other difference metrics. In some examples, encoding device 1504 may calculate values for sub-integer pixel positions of reference pictures stored in picture memory 64. For example, encoding device 1504 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in picture memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation, possibly performing interpolations to sub-pixel precision. Upon receiving the motion vector for the PU of the current video block, motion compensation unit 44 may locate the predictive block to which the motion vector points in a reference picture list. Encoding device 1504 forms a residual video block by subtracting pixel values of the predictive block from the pixel values of the current video block being coded, forming pixel difference values. The pixel difference values form residual data for the block, and may include both luma and chroma difference components. Summer 50 represents the component or components that perform this subtraction operation. Motion compensation unit 44 may also generate syntax elements associated with the video blocks and the video slice for use by decoding device 1612 in decoding the video blocks of the video slice.

Intra-prediction processing unit 46 may intra-predict a current block, as an alternative to the inter-prediction performed by motion estimation unit 42 and motion compensation unit 44, as described above. In particular, intra-prediction processing unit 46 may determine an intra-prediction mode to use to encode a current block. In some examples, intra-prediction processing unit 46 may encode a current block using various intra-prediction modes, e.g., during separate encoding passes, and intra-prediction unit processing 46 (or a mode select unit, not shown in FIG. 15) may select an appropriate intra-prediction mode to use from the tested modes. For example, intra-prediction processing unit 46 may calculate rate-distortion values using a rate-distortion analysis for the various tested intra-prediction modes, and may select the intra-prediction mode having the best rate-distortion characteristics among the tested modes. Rate-distortion analysis generally determines an amount of distortion (or error) between an encoded block and an original, unencoded block that was encoded to produce the encoded block, as well as a bitrate (that is, a number of bits) used to produce the encoded block. Intra-prediction processing unit 46 may calculate ratios from the distortions and rates for the various encoded blocks to determine which intra-prediction mode exhibits the best rate-distortion value for the block.

In any case, after selecting an intra-prediction mode for a block, intra-prediction processing unit 46 may provide information indicative of the selected intra-prediction mode for the block to entropy encoding unit 56. Entropy encoding unit 56 may encode the information indicating the selected intra-prediction mode. Encoding device 1504 may include in the transmitted bitstream configuration data definitions of encoding contexts for various blocks as well as indications of a most probable intra-prediction mode, an intra-prediction mode index table, and a modified intra-prediction mode index table to use for each of the contexts. The bitstream configuration data may include a plurality of intra-prediction mode index tables and a plurality of modified intra-prediction mode index tables (also referred to as codeword mapping tables).

After prediction processing unit 41 generates the predictive block for the current video block via either inter-prediction or intra-prediction, encoding device 1504 forms a residual video block by subtracting the predictive block from the current video block. The residual video data in the residual block may be included in one or more TUs and applied to transform processing unit 52. Transform processing unit 52 transforms the residual video data into residual transform coefficients using a transform, such as a discrete cosine transform (DCT) or a conceptually similar transform. Transform processing unit 52 may convert the residual video data from a pixel domain to a transform domain, such as a frequency domain.

Transform processing unit 52 may send the resulting transform coefficients to quantization unit 54. Quantization unit 54 quantizes the transform coefficients to further reduce bitrate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy encodes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy encoding technique. Following the entropy encoding by entropy encoding unit 56, the encoded bitstream may be transmitted to decoding device 1612, or archived for later transmission or retrieval by decoding device 1612. Entropy encoding unit 56 may also entropy encode the motion vectors and the other syntax elements for the current video slice being coded.

Inverse quantization unit 58 and inverse transform processing unit 60 apply inverse quantization and inverse transformation, respectively, to reconstruct the residual block in the pixel domain for later use as a reference block of a reference picture. Motion compensation unit 44 may calculate a reference block by adding the residual block to a predictive block of one of the reference pictures within a reference picture list. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reference block for storage in picture memory 64. The reference block may be used by motion estimation unit 42 and motion compensation unit 44 as a reference block to inter-predict a block in a subsequent video frame or picture.

In this manner, encoding device 1504 of FIG. 15 represents an example of a video encoder configured to generate syntax for a encoded video bitstream. Encoding device 1504 may, for example, generate VPS, SPS, and PPS parameter sets as described above. The encoding device 1504 may perform any of the techniques described herein, including the processes described above with respect to FIG. 13 and FIG. 14. The techniques of this disclosure have generally been described with respect to encoding device 1504, but as mentioned above, some of the techniques of this disclosure may also be implemented by post processing device 57.

FIG. 16 is a block diagram illustrating an example decoding device 1612. The decoding device 1612 includes an entropy decoding unit 80, prediction processing unit 81, inverse quantization unit 86, inverse transform processing unit 88, summer 90, filter unit 91, and picture memory 92. Prediction processing unit 81 includes motion compensation unit 82 and intra prediction processing unit 84. Decoding device 1612 may, in some examples, perform a decoding pass generally reciprocal to the encoding pass described with respect to encoding device 1504 from FIG. 15.

During the decoding process, decoding device 1612 receives an encoded video bitstream that represents video blocks of an encoded video slice and associated syntax elements sent by encoding device 1504. In some embodiments, decoding device 1612 may receive the encoded video bitstream from encoding device 1504. In some embodiments, decoding device 1612 may receive the encoded video bitstream from a network entity 79, such as a server, a media-aware network element (MANE), a video editor/splicer, or other such device configured to implement one or more of the techniques described above. Network entity 79 may or may not include encoding device 1504. Some of the techniques described in this disclosure may be implemented by network entity 79 prior to network entity 79 transmitting the encoded video bitstream to decoding device 1612. In some video decoding systems, network entity 79 and decoding device 1612 may be parts of separate devices, while in other instances, the functionality described with respect to network entity 79 may be performed by the same device that comprises decoding device 1612.

The entropy decoding unit 80 of decoding device 1612 entropy decodes the bitstream to generate quantized coefficients, motion vectors, and other syntax elements. Entropy decoding unit 80 forwards the motion vectors and other syntax elements to prediction processing unit 81. Decoding device 1612 may receive the syntax elements at the video slice level and/or the video block level. Entropy decoding unit 80 may process and parse both fixed-length syntax elements and variable-length syntax elements in one or more parameter sets, such as a VPS, SPS, and PPS.

When the video slice is coded as an intra-coded (I) slice, intra prediction processing unit 84 of prediction processing unit 81 may generate prediction data for a video block of the current video slice based on a signaled intra-prediction mode and data from previously decoded blocks of the current frame or picture. When the video frame is coded as an inter-coded (i.e., B, P or GPB) slice, motion compensation unit 82 of prediction processing unit 81 produces predictive blocks for a video block of the current video slice based on the motion vectors and other syntax elements received from entropy decoding unit 80. The predictive blocks may be produced from one of the reference pictures within a reference picture list. Decoding device 1612 may construct the reference frame lists, List 0 and List 1, using default construction techniques based on reference pictures stored in picture memory 92.

Motion compensation unit 82 determines prediction information for a video block of the current video slice by parsing the motion vectors and other syntax elements, and uses the prediction information to produce the predictive blocks for the current video block being decoded. For example, motion compensation unit 82 may use one or more syntax elements in a parameter set to determine a prediction mode (e.g., intra- or inter-prediction) used to code the video blocks of the video slice, an inter-prediction slice type (e.g., B slice, P slice, or GPB slice), construction information for one or more reference picture lists for the slice, motion vectors for each inter-encoded video block of the slice, inter-prediction status for each inter-coded video block of the slice, and other information to decode the video blocks in the current video slice.

Motion compensation unit 82 may also perform interpolation based on interpolation filters. Motion compensation unit 82 may use interpolation filters as used by encoding device 1604 during encoding of the video blocks to calculate interpolated values for sub-integer pixels of reference blocks. In this case, motion compensation unit 82 may determine the interpolation filters used by encoding device 1504 from the received syntax elements, and may use the interpolation filters to produce predictive blocks.

Inverse quantization unit 86 inverse quantizes, or de-quantizes, the quantized transform coefficients provided in the bitstream and decoded by entropy decoding unit 80. The inverse quantization process may include use of a quantization parameter calculated by encoding device 1604 for each video block in the video slice to determine a degree of quantization and, likewise, a degree of inverse quantization that should be applied. Inverse transform processing unit 88 applies an inverse transform (e.g., an inverse DCT or other suitable inverse transform), an inverse integer transform, or a conceptually similar inverse transform process, to the transform coefficients in order to produce residual blocks in the pixel domain.

After motion compensation unit 82 generates the predictive block for the current video block based on the motion vectors and other syntax elements, decoding device 1612 forms a decoded video block by summing the residual blocks from inverse transform processing unit 88 with the corresponding predictive blocks generated by motion compensation unit 82. Summer 90 represents the component or components that perform this summation operation. If desired, loop filters (either in the coding loop or after the coding loop) may also be used to smooth pixel transitions, or to otherwise improve the video quality. Filter unit 91 is intended to represent one or more loop filters such as a deblocking filter, an adaptive loop filter (ALF), and a sample adaptive offset (SAO) filter. Although filter unit 91 is shown in FIG. 16 as being an in loop filter, in other configurations, filter unit 91 may be implemented as a post loop filter. The decoded video blocks in a given frame or picture are then stored in picture memory 92, which stores reference pictures used for subsequent motion compensation. Picture memory 92 also stores decoded video for later presentation on a display device, such as video destination device 122 shown in FIG. 1.

In the foregoing description, aspects of the application are described with reference to specific embodiments thereof, but those skilled in the art will recognize that the invention is not limited thereto. Various features and aspects of the above-described invention may be used individually or jointly. Further, embodiments can be utilized in any number of environments and applications beyond those described herein. The specification and drawings are, accordingly, to be regarded as illustrative rather than restrictive. For the purposes of illustration, methods were described in a particular order. It should be appreciated that in alternate embodiments, the methods may be performed in a different order than that described.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The techniques described herein may be implemented in hardware, software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software modules or hardware modules configured for encoding and decoding, or incorporated in a combined video encoder-decoder (CODEC).

The coding techniques discussed herein may be embodied in an example video encoding and decoding system. A system includes a source device that provides encoded video data to be decoded at a later time by a destination device. In particular, the source device provides the video data to a destination device via a computer-readable medium. The source device and the destination device may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming devices, or the like. In some cases, the source device and the destination device may be equipped for wireless communication.

The destination device may receive the encoded video data to be decoded via the computer-readable medium. The computer-readable medium may comprise any type of medium or device capable of moving the encoded video data from a source device to a destination device. In one example, a computer-readable medium may comprise a communication medium to enable a source device to transmit encoded video data directly to a destination device in real-time. The encoded video data may be modulated according to a communication standard, such as a wireless communication protocol, and transmitted to a destination device. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device to destination device.

In some examples, encoded data may be output from output interface to a storage device. Similarly, encoded data may be accessed from the storage device by input interface. The storage device may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, the storage device may correspond to a file server or another intermediate storage device that may store the encoded video generated by source device. Destination device may access stored video data from the storage device via streaming or download. The file server may be any type of server capable of storing encoded video data and transmitting that encoded video data to the destination device. Example file servers include a web server (e.g., for a website), an FTP server, network attached storage (NAS) devices, or a local disk drive. Destination device may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from the storage device may be a streaming transmission, a download transmission, or a combination thereof.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications. In some examples, a system may be configured to support one-way or two-way video transmission to support applications such as video streaming, video playback, video broadcasting, and/or video telephony.

In one example the source device includes a video source, a video encoder, and a output interface. The destination device may include an input interface, a video decoder, and a display device. The video encoder of source device may be configured to apply the techniques disclosed herein. In other examples, a source device and a destination device may include other components or arrangements. For example, the source device may receive video data from an external video source, such as an external camera. Likewise, the destination device may interface with an external display device, rather than including an integrated display device.

The example system above is merely one example. Techniques for processing video data in parallel may be performed by any digital video encoding and/or decoding device. Although generally the techniques of this disclosure are performed by a video encoding device, the techniques may also be performed by a video encoder/decoder, typically referred to as a "CODEC." Moreover, the techniques of this disclosure may also be performed by a video preprocessor. Source devices and destination devices are merely examples of such coding devices in which a source device generates coded video data for transmission to destination device. In some examples, the source and destination devices may operate in a substantially symmetrical manner such that each of the devices includes video encoding and decoding components. Hence, example systems may support one-way or two-way video transmission between video devices, e.g., for video streaming, video playback, video broadcasting, or video telephony.

The video source may include a video capture device, such as a video camera, a video archive containing previously captured video, and/or a video feed interface to receive video from a video content provider. As a further alternative, the video source may generate computer graphics-based data as the source video, or a combination of live video, archived video, and computer generated video. In some cases, if a video source is a video camera, a source device and a destination device may form so-called camera phones or video phones. As mentioned above, however, the techniques described in this disclosure may be applicable to video coding in general, and may be applied to wireless and/or wired applications. In each case, the captured, pre-captured, or computer-generated video may be encoded by the video encoder. The encoded video information may then be output by output interface onto the computer-readable medium.

As noted, the computer-readable medium may include transient media, such as a wireless broadcast or wired network transmission, or storage media (that is, non-transitory storage media), such as a hard disk, flash drive, compact disc, digital video disc, Blu-ray disc, or other computer-readable media. In some examples, a network server (not shown) may receive encoded video data from the source device and provide the encoded video data to the destination device, e.g., via network transmission. Similarly, a computing device of a medium production facility, such as a disc stamping facility, may receive encoded video data from the source device and produce a disc containing the encoded video data. Therefore, the computer-readable medium may be understood to include one or more computer-readable media of various forms, in various examples.

The input interface of the destination device receives information from the computer-readable medium. The information of the computer-readable medium may include syntax information defined by the video encoder, which is also used by the video decoder, that includes syntax elements that describe characteristics and/or processing of blocks and other coded units, e.g., group of pictures (GOP). A display device displays the decoded video data to a user, and may comprise any of a variety of display devices such as a cathode ray tube (CRT), a liquid crystal display (LCD), a plasma display, an organic light emitting diode (OLED) display, or another type of display device. Various embodiments of the invention have been described.

## Claims

1. A method of processing video data, the method comprising:
obtaining a plurality of frames of video data, wherein the video data includes a plurality of video samples, each of the plurality of video samples including one or more frames of the plurality of frames;
determining that at least one frame of the plurality of frames of a first video sample of the plurality of video samples is corrupted; and
generating a media file which includes a sample entry (1048a - 1048n) for each video sample of the plurality of video samples, and a sample group description box (1060) that includes sample group type entries (1061), a first entry of the sample group type entries comprising a type identifier which indicates a video sample having at least one frame that is corrupted,
wherein generating the media file comprises associating each video sample of the plurality of video samples with a sample group type entry included in the sample group description box, and
wherein associating each of the plurality of video samples with a sample group type entry comprises associating the first video sample with the first entry, in response to determining that at least one frame of the first video sample is corrupted.

2. A method of processing a media file, the method comprising:
obtaining a media file including media content, wherein the media content includes:
a plurality of video samples, each of the plurality of video samples including one or more frames of the plurality of frames;
a sample entry (1048a-1048n) for each video sample of the plurality of video samples; and
a sample group description box (1060) that includes sample group type entries (1061), a first entry of the sample group type entries comprising a type identifier which indicates a video sample having at least one frame that is corrupted, wherein each video sample of the plurality of video samples is associated with a sample group type entry included in the sample group description box;determining that a first video sample of the plurality of samples is associated with the first entry;
determining, based on the association of the first video sample with the first entry , that the plurality of frames of the first video sample includes at least one corrupted frame; and
processing the at least one corrupted frame.

3. The method of claim 1 or claim 2, wherein the type identifier includes a sample group type.

4. The method of claim 1 or claim 2, wherein the video data includes first data corresponding to the at least one frame of the plurality of frames, and wherein the first data is insufficient for decoding the at least one frame properly.

5. The method of claim 1 or claim 2, wherein the at least one frame is part of an inter-frame prediction chain, wherein the video data includes first data corresponding to the inter-frame predication chain, and wherein the first data is insufficient for decoding the at least one frame properly.

6. The method of claim 1 or claim 2, wherein the media file is based on an International Standards Organization (ISO) base media file format (ISOBMFF).

7. The method of claim 2, wherein the processing the at least one corrupted frame based on the indication comprises:
identifying, based on the indication, a portion of the media content corresponding to the corrupted at least one frame; and
skipping processing of the portion of the media content.

8. An apparatus for processing video data, the apparatus comprising:
a memory configured to store the video data; and
a processor configured to:
obtain a plurality of frames of video data, wherein the video data includes a plurality of video samples, each of the plurality of video samples including one or more frames of the plurality of frames;
determine that at least one frame of the plurality of frames of a first video sample of the plurality of video samples is corrupted; and
generate a media file which includes a sample entry (1048a - 1048n) for each video sample of the plurality of video samples, and a sample group description box (1060) that includes sample group type entries (1061), a first entry of the sample group type entries comprising a type identifier which indicates a video sample having at least one frame that is corrupted,
wherein generating the media file comprises associating each video sample of the plurality of video samples with a sample group type entry included in the sample group description box, and
wherein associating each of the plurality of video samples with a sample group type entry comprises associating the first video sample with the first entry, in response to determining that at least one frame of the first video sample is corrupted.

9. An apparatus for processing video data, the apparatus comprising:
a memory configured to store the video data; and
a processor configured to:
obtain a media file including media content, wherein the media content includes:
a plurality of video samples, each of the plurality of video samples including one or more frames of the plurality of frames;
a sample entry (1048a-1048n) for each video sample of the plurality of video samples; and
a sample group description box (1060) that includes sample group type entries (1061), a first entry of the sample group type entries comprising a type identifier which indicates a video sample having at least one frame that is corrupted, wherein each video sample of the plurality of video samples is associated with a sample group type entry included in the sample group description box;
determine that a first video sample of the plurality of samples is associated with the first entry;
determine, based on the association of the first video sample with the first entry, that the plurality of frames of the first video sample includes at least one corrupted frame; and
process the at least one corrupted frame.

10. A non-transitory computer-readable medium having stored thereon instructions that, when executed by one or more processors, causes the one or more processors to perform the method according to any of the preceding method claims.

## Patentansprüche

1. Verfahren zum Verarbeiten von Videodaten, wobei das Verfahren Folgendes beinhaltet:
Einholen einer Mehrzahl von Frames von Videodaten, wobei die Videodaten eine Mehrzahl von Video-Samples enthalten, wobei jedes aus der Mehrzahl von Video-Samples einen oder mehrere Frames der Mehrzahl von Frames enthält;
Feststellen, dass mindestens ein Frame aus der Mehrzahl von Frames eines ersten Video-Sample der Mehrzahl von Video-Samples beschädigt ist; und
Erzeugen einer Mediendatei, die einen Sample-Eintrag (1048a - 1048n) für jedes Video-Sample aus der Mehrzahl von Video-Samples und eine Sample-Gruppenbeschreibungsbox (1060) enthält, die Sample-Gruppentypeinträge (1061) enthält, wobei ein erster Eintrag der Sample-Gruppentypeinträge eine Typenkennung umfasst, die ein Video-Sample mit mindestens einem Frame anzeigt, der beschädigt ist,
wobei das Erzeugen der Mediendatei das Assoziieren jedes Video-Sample aus der Mehrzahl von Video-Samples mit einem in der Sample-Gruppenbeschreibungsbox enthaltenen Sample-Gruppentypeintrag beinhaltet, und
wobei das Assoziieren jedes aus der Mehrzahl von Video-Samples mit einem Sample-Gruppentypeintrag das Assoziieren des ersten Video-Sample mit dem ersten Eintrag als Reaktion auf die Feststellung beinhaltet, dass mindestens ein Frame des ersten Video-Sample beschädigt ist.

2. Verfahren zum Verarbeiten einer Mediendatei, wobei das Verfahren Folgendes beinhaltet:
Einholen einer Mediendatei mit Medieninhalt, wobei der Medieninhalt Folgendes einschließt:
eine Mehrzahl von Video-Samples, wobei jedes aus der Mehrzahl von Video-Samples einen oder mehrere Frames aus der Mehrzahl von Frames enthält;
einen Sample-Eintrag (1048a-1048n) für jedes Video-Sample aus der Mehrzahl von Video-Samples; und
eine Sample-Gruppenbeschreibungsbox (1060), die Sample-Gruppentypeinträge (1061) enthält, wobei ein erster Eintrag der Sample-Gruppentypeinträge eine Typenkennung umfasst, die ein Video-Sample mit mindestens einem Frame anzeigt, der beschädigt ist, wobei jedes Video-Sample der Mehrzahl von Video-Samples mit einem in der Sample-Gruppenbeschreibungsbox enthaltenen Sample-Gruppentypeintrag assoziiert ist; Feststellen, dass ein erstes Video-Sample der Mehrzahl von Samples mit dem ersten Eintrag assoziiert ist;
Feststellen, auf der Basis der Assoziation des ersten Video-Sample mit dem ersten Eintrag, dass die Mehrzahl von Frames des ersten Video-Sample mindestens einen beschädigten Frame enthält; und
Verarbeiten des mindestens einen beschädigten Frame.

3. Verfahren nach Anspruch 1 oder Anspruch 2, wobei die Typenkennung einen Sample-Gruppentyp enthält.

4. Verfahren nach Anspruch 1 oder Anspruch 2, wobei die Videodaten erste Daten enthalten, die dem mindestens einen Frame aus der Mehrzahl von Frames entsprechen, und wobei die ersten Daten nicht ausreichen, um den mindestens einen Frame richtig zu decodieren.

5. Verfahren nach Anspruch 1 oder Anspruch 2, wobei der mindestens eine Frame Teil einer Inter-Frame-Prädiktionskette ist, wobei die Videodaten erste Daten enthalten, die der Inter-Frame-Prädiktionskette entsprechen, und wobei die ersten Daten nicht ausreichen, um den mindestens einen Frame richtig zu decodieren.

6. Verfahren nach Anspruch 1 oder Anspruch 2, wobei die Mediendatei auf einem ISO-(International Standards Organization)-Basismediendateiformat (ISOBMFF) basiert.

7. Verfahren nach Anspruch 2, wobei das Verarbeiten des mindestens einen beschädigten Frame auf der Basis der Anzeige Folgendes beinhaltet:
Identifizieren, auf der Basis der Anzeige, eines Teils des Medieninhalts, der dem beschädigten mindestens einen Frame entspricht; und
Überspringen der Verarbeitung des Teils des Medieninhalts.

8. Vorrichtung zum Verarbeiten von Videodaten, wobei die Vorrichtung Folgendes umfasst:
einen Speicher, konfiguriert zum Speichern der Videodaten; und
einen Prozessor, konfiguriert zum:
Einholen einer Mehrzahl von Frames von Videodaten, wobei die Videodaten eine Mehrzahl von Video-Samples enthalten, wobei jedes aus der Mehrzahl von Video-Samples ein oder mehrere Frames der Mehrzahl von Frames enthält;
Feststellen, dass mindestens ein Frame aus der Mehrzahl von Frames eines ersten Video-Sample der Mehrzahl von Video-Samples beschädigt ist; und
Erzeugen einer Mediendatei, die einen Sample-Eintrag (1048a - 1048n) für jedes Video-Sample der Mehrzahl von Video-Samples und eine Sample-Gruppenbeschreibungsbox (1060) enthält, die Sample-Gruppentypeinträge (1061) enthält, wobei ein erster Eintrag der Sample-Gruppentypeinträge eine Typenkennung umfasst, die ein Video-Sample mit mindestens einem Frame anzeigt, der beschädigt ist,
wobei das Erzeugen der Mediendatei das Assoziieren jedes Video-Sample aus der Mehrzahl von Video-Samples mit einem Sample-Gruppentypeintrag umfasst, der in der Sample-Gruppenbeschreibungsbox enthalten ist, und
wobei das Assoziieren jedes aus der Mehrzahl von Video-Samples mit einem Sample-Gruppentypeintrag das Assoziieren des ersten Video-Sample mit dem ersten Eintrag als Reaktion auf die Feststellung umfasst, dass mindestens ein Frame des ersten Video-Sample beschädigt ist.

9. Vorrichtung zum Verarbeiten von Videodaten, wobei die Vorrichtung Folgendes umfasst:
einen Speicher, konfiguriert zum Speichern der Videodaten; und
einen Prozessor, konfiguriert zum:
Einholen einer Mediendatei mit Medieninhalt, wobei der Medieninhalt Folgendes einschließt:
eine Mehrzahl von Video-Samples, wobei jedes aus der Mehrzahl von Video-Samples einen oder mehrere Frames aus der Mehrzahl von Frames enthält;
einen Sample-Eintrag (1048a-1048n) für jedes Video-Sample aus der Mehrzahl von Video-Samples; und
eine Sample-Gruppenbeschreibungsbox (1060), die Sample-Gruppentypeinträge (1061) enthält, wobei ein erster Eintrag der Sample-Gruppentypeinträge eine Typenkennung umfasst, die ein Video-Sample mit mindestens einem Frame anzeigt, der beschädigt ist, wobei jedes Video-Sample aus der Mehrzahl von Video-Samples mit einem in der Sample-Gruppenbeschreibungsbox enthaltenen Sample-Gruppentypeintrag assoziiert ist;
Feststellen, dass ein erstes Video-Sample aus der Mehrzahl von Samples mit dem ersten Eintrag assoziiert ist;
Feststellen, auf der Basis der Assoziation des ersten Video-Sample mit dem ersten Eintrag, dass die Mehrzahl von Frames des ersten Video-Sample mindestens einen beschädigten Frame enthält; und
Verarbeiten des mindestens einen beschädigten Frame.

10. Nichtflüchtiges computerlesbares Medium, auf dem Befehle gespeichert sind, die bei Ausführung durch einen oder mehrere Prozessoren bewirken, dass die ein oder mehreren Prozessoren das Verfahren nach einem der vorherigen Verfahrensansprüche durchführen.

## Revendications

1. Procédé de traitement de données vidéo, le procédé comprenant :
l'obtention d'une pluralité de trames de données vidéo, les données vidéo comprenant une pluralité d'échantillons vidéo, chacun de la pluralité d'échantillons vidéo comprenant une ou plusieurs trames de la pluralité de trames ;
la détermination qu'au moins une trame de la pluralité de trames d'un premier échantillon vidéo de la pluralité d'échantillons vidéo est corrompue ; et
la génération d'un fichier multimédia qui comporte une entrée d'échantillon (1048a - 1048n) pour chaque échantillon vidéo de la pluralité d'échantillons vidéo, et une zone de description de groupe d'échantillons (1060) qui comporte des entrées de type de groupe d'échantillons (1061), une première entrée des entrées de type de groupe d'échantillons comprenant un identifiant de type qui indique un échantillon vidéo présentant au moins une trame corrompue,
dans lequel la génération du fichier multimédia comprend l'association de chaque échantillon vidéo de la pluralité d'échantillons vidéo à une entrée de type de groupe d'échantillons incluse dans la zone de description de groupe d'échantillons, et
dans lequel l'association de chacun de la pluralité d'échantillons vidéo à une entrée de type de groupe d'échantillons comprend l'association du premier échantillon vidéo à la première entrée, en réponse à la détermination qu'au moins une trame du premier échantillon vidéo est corrompue.

2. Procédé de traitement d'un fichier multimédia, comprenant :
l'obtention d'un fichier multimédia comportant un contenu multimédia, le contenu multimédia comportant :
une pluralité d'échantillons vidéo, chacun de la pluralité d'échantillons vidéo comportant une ou plusieurs trames de la pluralité de trames ;
une entrée d'échantillon (1048a-1048n) pour chaque échantillon vidéo de la pluralité d'échantillons vidéo ; et
une zone de description de groupe d'échantillons (1060) qui comporte des entrées de type de groupe d'échantillons (1061), une première entrée des entrées de type de groupe d'échantillons comprenant un identifiant de type qui indique un échantillon vidéo présentant au moins une trame corrompue, chaque échantillon vidéo de la pluralité d'échantillons vidéo étant associé à une entrée de type de groupe d'échantillons incluse dans la zone de description de groupe d'échantillons ;
la détermination qu'un premier échantillon vidéo de la pluralité d'échantillons est associé à la première entrée ;
la détermination, en fonction de l'association du premier échantillon vidéo à la première entrée, que la pluralité de trames du premier échantillon vidéo comprend au moins une trame corrompue ; et
le traitement de l'au moins une trame corrompue.

3. Procédé selon la revendication 1 ou de la revendication 2, dans lequel l'identifiant de type comporte un type d'entrée d'échantillon.

4. Procédé selon la revendication 1 ou la revendication 2, dans lequel les données vidéo comprennent des premières données correspondant à l'au moins une trame de la pluralité de trames, et dans lequel les premières données sont insuffisantes pour décoder correctement l'au moins une trame.

5. Procédé selon la revendication 1 ou la revendication 2, dans lequel l'au moins une trame fait partie d'une chaîne de prédiction inter-trames, dans lequel les données vidéo comprennent des premières données correspondant à la chaîne de prédiction inter-trames, et dans lequel les premières données sont insuffisantes pour décoder correctement l'au moins une trame.

6. Procédé selon la revendication 1 ou la revendication 2, dans lequel le fichier multimédia est basé sur un format de fichier multimédia de base de l'organisation de standardisation internationale (ISO) (ISOBMFF).

7. Procédé selon la revendication 2, dans lequel le traitement de l'au moins une trame corrompue en fonction de l'indication comprend :
l'identification, en fonction de l'indication, d'une partie du contenu multimédia correspondant à l'au moins une trame corrompue ; et
le saut du traitement de la partie du contenu multimédia.

8. Appareil de traitement de données vidéo, l'appareil comprenant :
une mémoire configurée pour mémoriser les données vidéo ; et
un processeur configuré pour :
obtenir une pluralité de trames de données vidéo, les données vidéo comprenant une pluralité d'échantillons vidéo, chacun de la pluralité d'échantillons vidéo comprenant une ou plusieurs trames de la pluralité de trames ;
déterminer qu'au moins une trame de la pluralité de trames d'un premier échantillon vidéo de la pluralité d'échantillons vidéo est corrompue ; et
générer un fichier multimédia qui comporte une entrée d'échantillon (1048a - 1048n) pour chaque échantillon vidéo de la pluralité d'échantillons vidéo, et une zone de description de groupe d'échantillons (1060) qui comporte des entrées de type de groupe d'échantillons (1061), une première entrée des entrées de type de groupe d'échantillons comprenant un identifiant de type qui indique un échantillon vidéo présentant au moins une trame corrompue,
dans lequel la génération du fichier multimédia comprend l'association de chaque échantillon vidéo de la pluralité d'échantillons vidéo à une entrée de type de groupe d'échantillons incluse dans la zone de description de groupe d'échantillons, et
dans lequel l'association de chacun de la pluralité d'échantillons vidéo à une entrée de type de groupe d'échantillons comprend l'association du premier échantillon vidéo à la première entrée, en réponse à la détermination qu'au moins une trame du premier échantillon vidéo est corrompue.

9. Appareil de traitement de données vidéo, l'appareil comprenant :
une mémoire configurée pour mémoriser les données vidéo ; et
un processeur configuré pour :
obtenir un fichier multimédia comportant un contenu multimédia, le contenu multimédia comprenant :
une pluralité d'échantillons vidéo, chacun de la pluralité d'échantillons vidéo comportant une ou plusieurs trames de la pluralité de trames ;
une entrée d'échantillon (1048a-1048n) pour chaque échantillon vidéo de la pluralité d'échantillons vidéo ; et
une zone de description de groupe d'échantillons (1060) qui comporte des entrées de type de groupe d'échantillons (1061), une première entrée des entrées de type de groupe d'échantillons comprenant un identifiant de type qui indique un échantillon vidéo présentant au moins une trame corrompue, chaque échantillon vidéo de la pluralité d'échantillons vidéo étant associé à une entrée de type de groupe d'échantillons incluse dans la zone de description de groupe d'échantillons ;
déterminer qu'un premier échantillon vidéo de la pluralité d'échantillons est associé à la première entrée ;
déterminer, en fonction de l'association du premier échantillon vidéo à la première entrée, que la pluralité de trames du premier échantillon vidéo comprend au moins une trame corrompue ; et
traiter l'au moins une trame corrompue.

10. Support non transitoire lisible par ordinateur sur lequel sont stockées des instructions qui, à leur exécution par un ou plusieurs processeurs, amènent les un ou plusieurs processeurs à réaliser le procédé selon l'une quelconque des revendications de procédé précédentes.
